# EUROPEAN PATENT SPECIFICATION

(11) **EP 3 292 075 B1**
(45) Date of publication and mention of the grant of the patent: **27.02.2019**
(21) Application number: 15721688.8
(22) Date of filing: 06.05.2015
(51) Int. Cl.: B68G 7/02, B60N 2/70, B68G 15/00

(54) **SYSTEM AND METHOD OF CONTROLLING FIBERS IN A MOLD**
SYSTEM UND VERFAHREN ZUR STEUERUNG VON FASERN IN EINER FORM
SYSTÈME ET PROCÉDÉ DE COMMANDE DE FIBRES DANS UN MOULE

(43) Date of publication of application: 14.03.2018
(73) Proprietor: Schukra Gerätebau GmbH, 2560 Berndorf (AT)
(72) Inventor: KRISTO, Darko, 2540 Bad Vöslau (AT); EISMAYER, Heinrich, 2514 Traiskirchen (AT); KITZBERGER, Peter, 2560 Berndorf (AT); VUJANOVIC, Zoran, 2542 Kottingbrunn (AT); GOLD, Oliver, 97318 Kitzingen (DE); MOSSBECK, Niels, Carthage, Missouri 64836 (US); PETZEL, Jan, 72074 Tübingen (DE); KÖNCZÖL, Georg, 1220 Wien (AT)
(74) Representative: Banzer, Hans-Jörg
(86) International application number: PCT/EP2015/059973
(87) International publication number: WO 2016/177423

(56) References cited:
- EP-A1- 2 417 876
- DE-A1-102010 034 159
- US-B1- 7 540 307

## Description

### FIELD OF THE INVENTION

Embodiments of the invention relate to cushion bodies formed from fibers. Embodiments of the invention relate in particular to a system and a method for controlling fibers which may be used in a process of forming a product having resilient characteristics from a fiber material. Embodiments of the invention relate in particular to a system and a method for controlling fibers which may be used in a process of forming a fiber cushion body from fibers.

### BACKGROUND OF THE INVENTION

Foams, such as polyurethane (PU) foams, are widely used as fabric backings for seats, such as for vehicle interior materials in the transportation industry. The foams are adhered to the backs of textile face materials. These foam backed composites have a cushion effect which can offer comfort or a luxurious feel in contact areas.

Polyurethane foam is widely used as cushioning material for seats. However, the polyurethane foam backed material can emit volatile substances, which may contribute to 'fogging' of vehicle or housing interiors and can furthermore include critical substances, which may negatively affect human health. Furthermore the foam itself may oxidize over time leading to a color change in the material. Recyclability is also an issue which has to be addressed.

For these and other reasons, there is a continued need for another material that would provide cushion properties similar to the ones of foam materials at similar costs. One class of materials which has received attention in this regard is nonwovens, for example polyester nonwovens. These materials can provide a suitable backing to many face fabrics.

To produce seat cushion bodies or other fiber products having resilient characteristics, it may be desirable to control an orientation and/or density of fibers. The generation of a gas flow pattern which provides the level of control desirable for forming high quality products such as seat cushion body is a considerable challenge.

Document EP 2 417 876 A1 discloses a system according to the preamble of independent claim 1, and a method according to the preamble of independent claim 13.

### BRIEF SUMMARY OF THE INVENTION

In view of the above, there is a continued need in the art for techniques which provide enhanced control over fibers inserted into a mold for forming a product. There is in particular a need in the art for systems and methods suitable for use in a process of forming a fiber cushion body or another product having resilient characteristics along a main load direction, while providing well-defined flow patterns which can be controlled.

These and other needs are addressed by systems, methods and products according to embodiments. According to exemplary embodiments, a nozzle is provided which defines a location at which gas is withdrawn from a mold into which fibers are filled. The systems and methods according to embodiments are configured such that a relative displacement is effected between the nozzle and the mold. By using a nozzle and a relative translatory displacement between the nozzle and the mold, good control over gas flow patterns is attained. In particular, more homogenous flow patterns can be attained compared to flow control mechanisms which are restricted to using pivotable elements.

According to the invention, a system for controlling a fiber orientation and/or a density of fibers in a mold comprises at least one nozzle configured to define a location at which gas is withdrawn from the mold. The system comprises a displacement mechanism configured to effect a relative displacement between the at least one nozzle and the mold.

Such a system provides enhanced control over gas flow patterns within the mold.

The displacement mechanism may be configured to effect a relative translatory displacement between the mold and the at least one nozzle.

The displacement mechanism may be configured to effect a translatory displacement of the at least one nozzle, while the mold remains stationary while the at least one nozzle is displaced relative to the mold.

The displacement mechanism may be configured to effect a translatory displacement of the mold, while the at least one nozzle remains stationary while the mold is displaced relative to the at least one nozzle.

The displacement mechanism may be configured to effect a translatory displacement of the mold and to effect a translatory displacement of the at least one nozzle, with the motion speeds and/or directions of the mold and the at least one nozzle being different from each other.

According to the invention, the system is configured such that fibers are supplied into the mold along a fiber supply direction. The system may comprise a transport mechanism which transports fibers into the mold along the fiber supply direction.

According to the invention, the displacement mechanism is configured to effect a relative translatory displacement between the at least one nozzle and the mold which is directed parallel to the fiber supply direction.

The displacement mechanism may be further configured to effect a relative translatory displacement between the at least one nozzle and the mold which is directed transverse to the fiber supply direction.

The system may comprise a flow guide configured to guide gas from the at least one nozzle to a suction channel. The flow guide may comprise a plurality of channels. Such a flow guide may provide flow harmonization, thereby further improving the gas flow pattern in the mold.

The flow guide may be interposed between the nozzle and a suction channel which includes a ventilator or another suction device.

The at least one nozzle may be in fluid communication with a first set of channels of the plurality of channels when the at least one nozzle is in a first position relative to the mold. The at least one nozzle may be in fluid communication with a second set of channels of the plurality of channels when the at least one nozzle is in a second position relative to the mold which is different from the first position, the second set of channels being disjoint from the first set of channels.

The second set of channels may be offset from the first set of channels in a direction parallel to the fiber supply direction.

The system may comprise a closure mechanism configured to increase a flow resistance of a fraction of the plurality of channels.

The closure mechanism may be configured to increase the flow resistance of the fraction of channels by at least partially covering end openings thereof.

The closure mechanism may be configured to increase the flow resistance of those channels which are not in fluid communication with the nozzle.

The closure mechanism may be adjustable in a manner which is coordinated with a relative position of the at least one nozzle and the mold.

The closure mechanism and nozzle may be configured such that a displacement of the at least one nozzle actuates the closure mechanism.

The closure mechanism may be comprise at least one slat which is attached to the at least one nozzle so as to be displaceable therewith.

The closure mechanism may comprise a plurality of slats which are hingedly coupled to each other.

One ventilator or a plurality of ventilators may be arranged on the at least one nozzle. The ventilator or the plurality of ventilators may be mounted so as to be at least partially disposed within an interior cavity of the at least one nozzle.

The system may be configured to control the relative translatory displacement between the at least one nozzle and the mold as a function of a filling level of the mold. The system may be configured to control the relative translatory displacement such that the nozzle remains positioned at a level which corresponds to a filling level of the fiber material in the mold.

The system may comprise a control device configured to control the relative displacement between the at least one nozzle and the mold as a function of a filling level of the mold.

The control device may be configured to effect the translatory displacement between the at least one nozzle and the mold in dependence on a rate at which the fibers are supplied into the mold.

The system may comprise a suction device, which may be a ventilator.

The suction device may be arranged so as to be spaced from the at least one nozzle. A flow guide defining a plurality of channels may be interposed between the at least one nozzle and the suction device. Flow patterns particularly suitable for orienting fibers for forming a resilient fiber product may thereby be attained.

The control device may be configured to control the relative displacement and/or the suction device to adjust the fiber orientation and/or the density of fibers in a spatially varying manner.

The control device may be configured to control the relative displacement as a function of a rate at which the fibers are supplied to the mold as a function time.

The system may comprise a cutting device which produces the fibers, e.g. by cutting one or several yarn(s). The control device may be configured to control the relative displacement between the at least one nozzle and the mold as a function of a rate at which the cutting device produces the fiber material. The control device may perform open loop control or closed loop control to control the relative displacement between the at least one nozzle and the mold as a function of filling level of the mold.

The at least one nozzle may comprise a first nozzle and a second nozzle arranged to receive the mold therebetween.

The first nozzle and the second nozzle may be independently displaceable.

The control device may be configured to control a displacement of the first nozzle and the second nozzle to displace both the first nozzle and the second nozzle relative to the mold.

The system may be configured to produce a fiber cushion body.

A main load direction of the fiber cushion body may correspond to a direction in which gas is withdrawn from the mold by the at least one nozzle.

The system may be configured to produce a fiber cushion body by thermal activation of the fiber material inserted into the mold. The system may comprise a heating station for thermally activating the fibers filled into the mold. The heating station may be spaced from a location at which the fibers are supplied into the mold.

The system may comprise a receptacle for receiving the mold. The at least one displacement mechanism may be configured to effect a relative translatory displacement between the receptacle and the at least one nozzle.

The system may comprise the mold. The mold may be received in the receptacle.

According to the invention, a method of controlling a fiber orientation and/or a density of fibers in a mold is provided. The method comprises withdrawing a gas from the mold through at least one nozzle. The method comprises effecting a relative translatory displacement between the at least one nozzle and the mold.

Such a method provides enhanced control over gas flow patterns within the mold.

The method may be performed by the system of an embodiment.

Effecting the relative translatory displacement may comprise effecting a translatory displacement of the at least one nozzle, while the mold remains stationary while the at least one nozzle is displaced relative to the mold.

Effecting the relative translatory displacement may comprise effecting a translatory displacement of the mold, while the at least one nozzle remains stationary while the mold is displaced relative to the at least one nozzle.

Effecting the relative translatory displacement may comprise effecting a translatory displacement of the mold and to effect a translatory displacement of the at least one nozzle, with the motion speeds and/or directions of the mold and the at least one nozzle being different from each other.

According to the invention, the method comprises supplying fibers into the mold along a fiber supply direction.

According to the invention, effecting the relative translatory displacement may comprise effecting a relative translatory displacement between the at least one nozzle and the mold which is directed parallel to the fiber supply direction.

Effecting the relative translatory displacement may comprise effecting a relative translatory displacement between the at least one nozzle and the mold which is directed transverse to the fiber supply direction.

In the method, a flow guide may guide gas from the at least one nozzle to a suction channel. The flow guide may comprise a plurality of channels.

In the method, the flow guide may be interposed between the nozzle and a suction channel which includes a ventilator or another suction device.

In the method, the at least one nozzle may be in fluid communication with a first set of channels of the plurality of channels when the at least one nozzle is in a first position relative to the mold. In the method, the at least one nozzle may be in fluid communication with a second set of channels of the plurality of channels when the at least one nozzle is in a second position relative to the mold which is different from the first position, the second set of channels being disjoint from the first set of channels.

In the method, the second set of channels may be offset from the first set of channels in a direction parallel to the fiber supply direction.

The method may comprise increasing a flow resistance of a fraction of the plurality of channels.

The method may comprise increasing the flow resistance of the fraction of channels by at least partially covering end openings thereof.

The method may comprise increasing the flow resistance of those channels which are not in fluid communication with the nozzle.

The flow resistance may be increased by a closure mechanism which at least partially overlaps end openings of the plurality of channels. The method may comprise adjusting the closure mechanism in a manner which is coordinated with a relative position of the at least one nozzle and the mold.

In the method, displacement of the at least one nozzle may actuate the closure mechanism.

In the method, the closure mechanism may be comprise at least one slat which is attached to the at least one nozzle so as to be displaceable therewith.

In the method, the closure mechanism may comprise a plurality of slats which are hingedly coupled to each other.

In the method, one ventilator or a plurality of ventilators may be arranged on the at least one nozzle. The plurality of ventilators may be mounted so as to be at least partially disposed within an interior cavity of the at least one nozzle.

The method may comprise controlling the relative translatory displacement between the at least one nozzle and the mold as a function of a filling level of the mold. The method may comprise controlling the relative translatory displacement such that the nozzle remains positioned at a level which corresponds to a filling level of the fiber material in the mold.

To control the relative translatory displacement as a function of filling level, the relative translatory displacement may be controlled in dependence on a rate at which the fibers are supplied into the mold.

In the method, a suction device may be in fluid communication with the at least one nozzle. The suction device may be a ventilator.

In the method, the suction device may be arranged so as to be spaced from the at least one nozzle. A flow guide defining a plurality of channels may be interposed between the at least one nozzle and the suction device.

The method may comprise controlling the relative displacement and/or the suction device to adjust the fiber orientation and/or the density of fibers in a spatially varying manner.

The method may comprise controlling the relative displacement as a function of a rate at which the fibers are supplied to the mold as a function time.

The method may comprise produces the fibers, e.g. by cutting one or several yarn(s). The method may comprise controlling the relative displacement between the at least one nozzle and the mold as a function of a rate at which the cutting device produces the fiber material. The method may comprise performing open loop control or closed loop control to control the relative displacement between the at least one nozzle and the mold as a function of filling level of the mold.

In the method, the at least one nozzle may comprise a first nozzle and a second nozzle arranged to receive the mold therebetween.

The method may comprise controlling a displacement of the first nozzle and the second nozzle to displace both the first nozzle and the second nozzle relative to the mold.

In the method, the first nozzle and the second nozzle may be independently displaceable.

The method may comprise producing a fiber cushion body from the fibers oriented in the mold.

A main load direction of the fiber cushion body may correspond to a direction in which gas is withdrawn from the mold by the at least one nozzle.

The fiber cushion body may be produced by thermal activation of the fiber material inserted into the mold. The method may comprise thermally activating the fibers filled into the mold.

A method of producing a fiber cushion body comprises supplying fibers into a mold, controlling the fiber orientation and/or density of the fibers in the mold using the method of any embodiment, and thermally activating at least a fraction of the fibers to form a fiber cushion body.

The method may comprise post-processing the fiber cushion body.

Post-processing the fiber cushion body may comprise forming at least one channel in the fiber cushion body.

Post-processing the fiber cushion body may comprise attaching a trim material to the fiber cushion body.

The method may comprise installing the fiber cushion body in a seat. The fiber cushion body may be installed in the seat to provide a support surface for the user's thighs. The fiber cushion body may be installed in a backrest of the seat to provide a support surface for the user's back.

The seat may be a vehicle seat. The method may comprise installing the vehicle seat in a vehicle.

The seat may be a residential or office seating furniture.

According to another embodiment, a fiber product having resilient characteristics in response to a load applied along a load direction is provided which is produced using the method according to an embodiment.

The systems and methods for producing a product from fiber material according to various aspects and embodiments provide enhanced control over the fiber orientation.

The systems and methods according to various aspects and embodiments may be used for producing seat cushion bodies for various types of seats, including seats for automobiles, aircrafts and trains and seats for office or home seating.

### BRIEF DESCRIPTION OF THE DRAWINGS

Embodiments of the invention will be described with reference to the accompanying drawings in which like reference numerals designate like elements.
FIG. 1 is a schematic view of a system according to an embodiment.
FIG. 2 is a schematic view of the system of FIG. 1 in operation.
FIG. 3 is a schematic view of the system of FIG. 1 in operation.
FIG. 4 is a schematic view of a system according to an embodiment.
FIG. 5 is a schematic view of a system according to an embodiment.

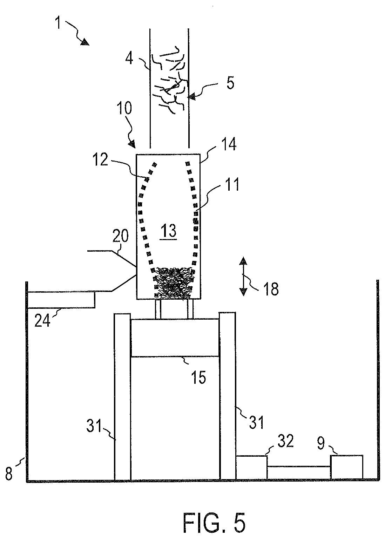

FIG. 5 is a perspective view of a system according to an embodiment.

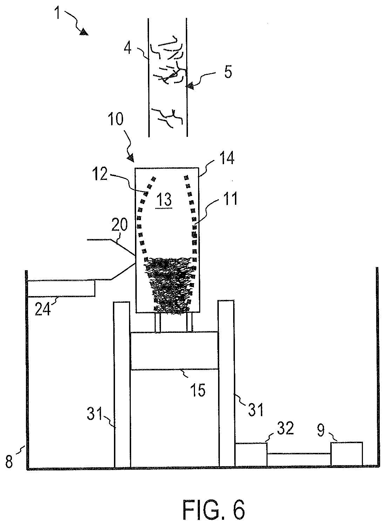

FIG. 6 is a schematic view of the system of FIG. 5 in operation.

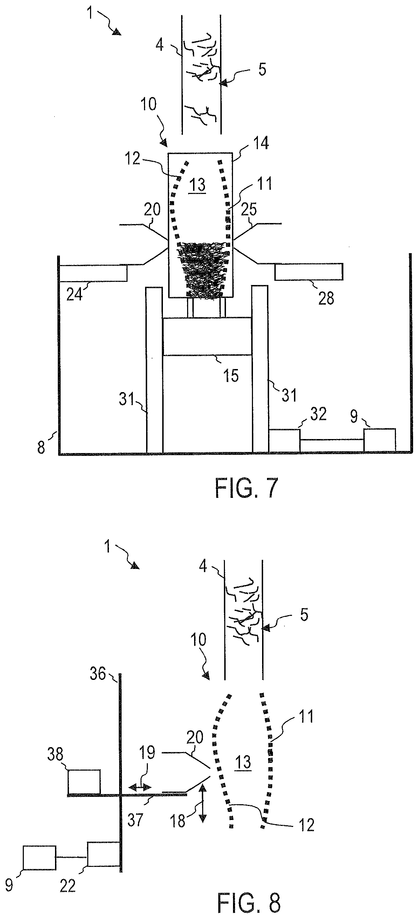

FIG. 7 is a schematic view of a system according to an embodiment.
FIG. 8 is a schematic view of a system according to an embodiment.

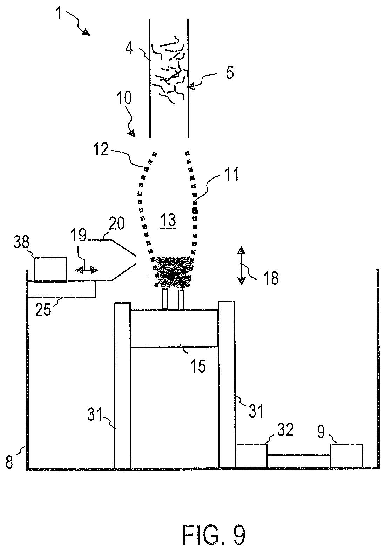

FIG. 9 is a schematic view of the system of FIG. 8 in operation.

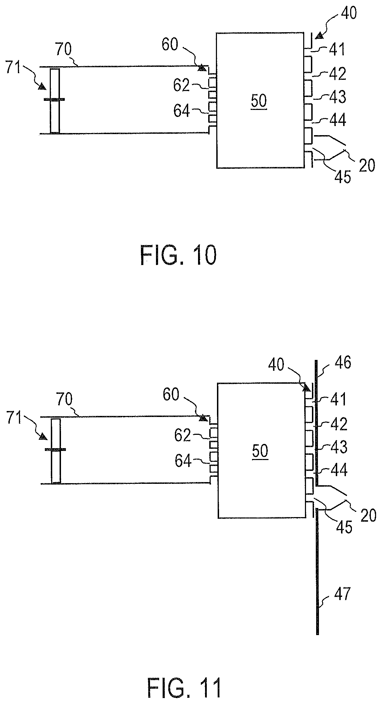

FIG. 10 is a partial view of a flow guide of a system according to an embodiment.
FIG. 11 is a partial view of a flow guide of a system according to an embodiment.

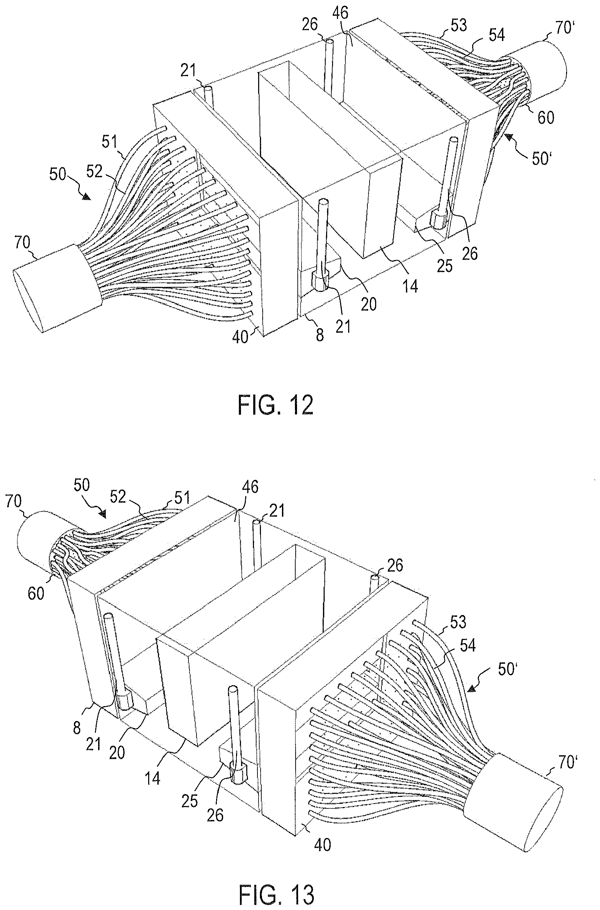

FIG. 12 is a perspective view of a system according to an embodiment.
FIG. 13 is another perspective view of the system of FIG. 12.

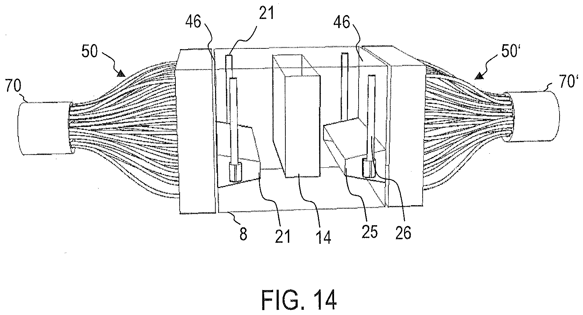

FIG. 14 is a side perspective view of the system of FIG. 12.

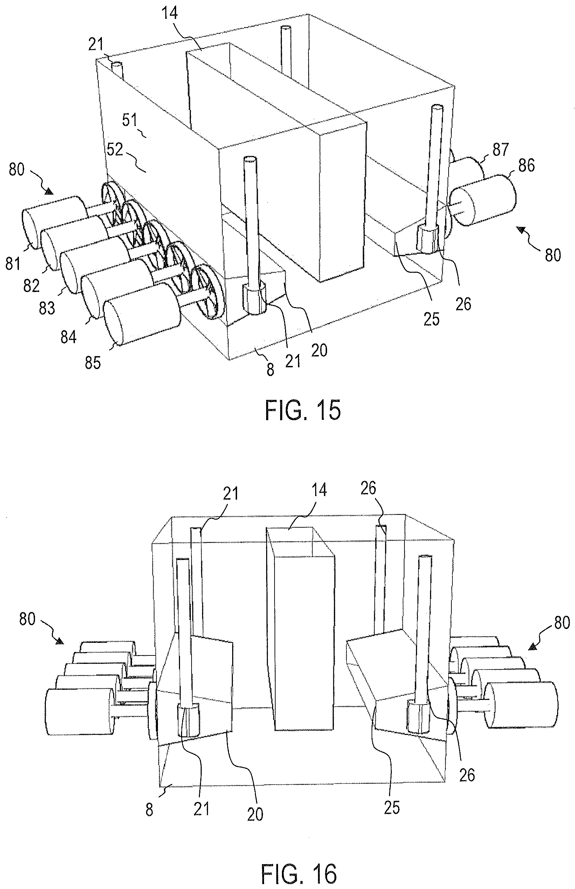

FIG. 15 is a perspective view of a system according to an embodiment.
FIG. 16 is a side perspective view of the system of FIG. 15.

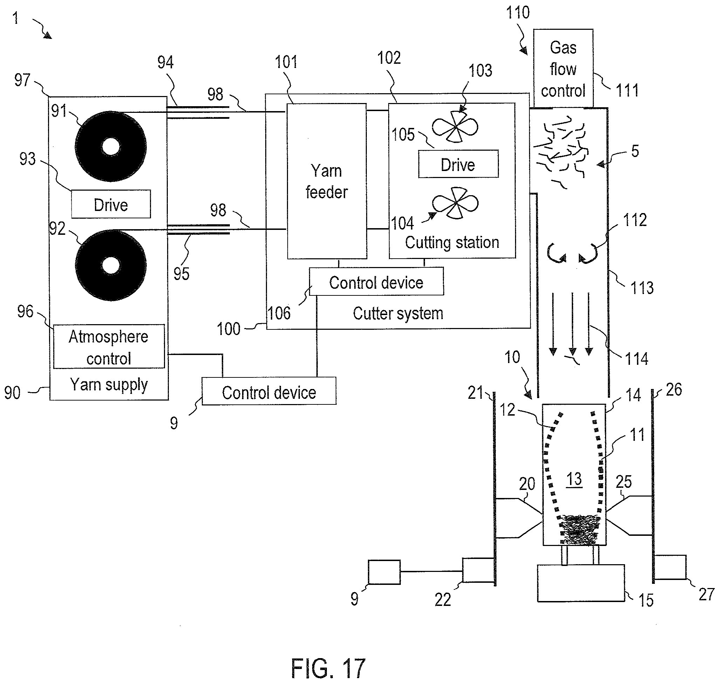

FIG. 17 is a schematic view of a system according to an embodiment.

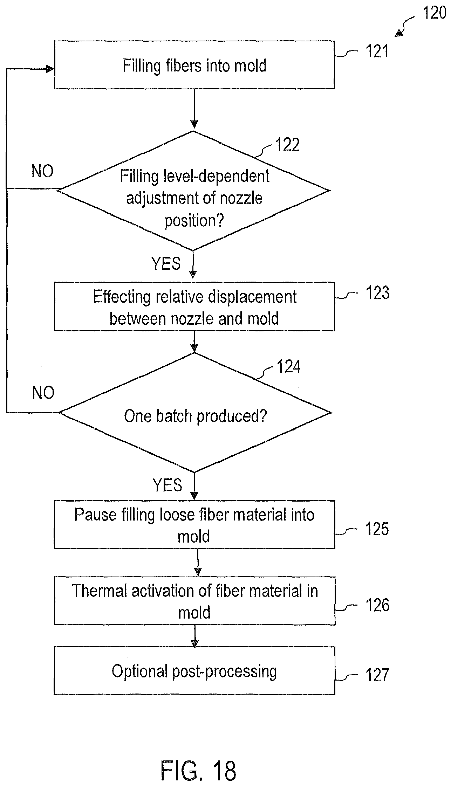

FIG. 18 is a flow chart of a method according to an embodiment.

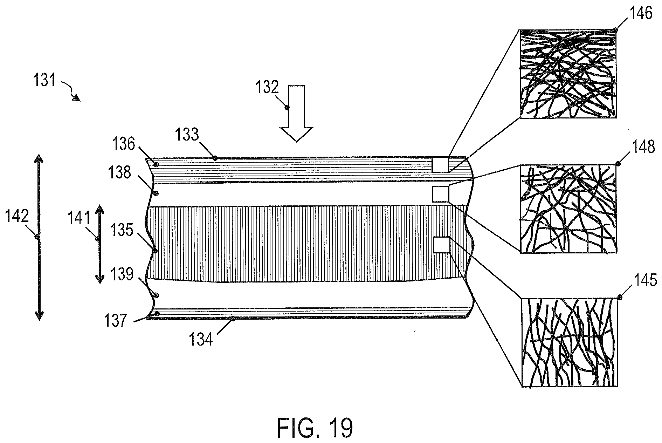

FIG. 19 is a schematic view of a fiber cushion product produced by a method or system according to an embodiment.

### DESCRIPTION OF EMBODIMENTS

Exemplary embodiments of the invention will now be described with reference to the drawings. While some embodiments will be described in the context of specific fields of application, the embodiments are not limited to this field of application. Further, the features of the various embodiments may be combined with each other unless specifically stated otherwise.

While some embodiments will be described in the context of products which are fiber seat cushion bodies, the tools, systems and methods according to embodiments may also be used for forming other products of a fiber material.

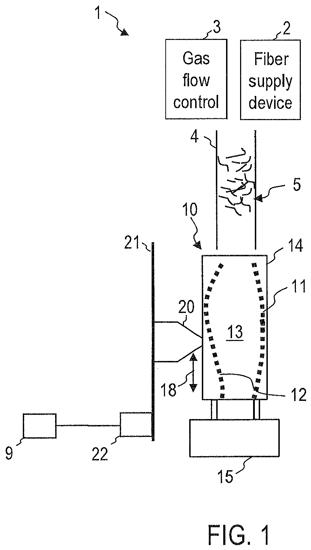

FIG. 1 is a schematic view of a system 1 for controlling an orientation and/or density of fibers in a mold 10. The system 1 may be configured to produce a product from fiber material. The system 1 may be configured for producing a product from fiber material which has resilient characteristics along a load direction.

The system 1 may be a system for producing a seat cushion body from loose fiber material inserted into the mold 10, with the system 1 being configured to control the orientation and/or density of fibers in the mold 10in order to control the characteristics of the seat cushion body. The characteristics may include resilience when the produced seat cushion body is compressed along a load direction.

The system 1 comprises at least one nozzle 20. The system 1 may comprise one nozzle 20 or a plurality of nozzles. While only one nozzle is shown in FIG. 1, the system 1 may comprise a plurality of nozzles 20. The nozzle 20 and at least one further nozzle may be arranged so as to receive the mold 10therebetween.

The nozzle 20 defines a location at which gas is withdrawn from the mold 10. The mold 10 comprises at least one face 11, 12 having gas passages. The mold 10 may comprise a major face 11 and a further major face 12, each having gas passages formed therein. The nozzle 20 may be configured such that, in operation, the system 1 withdraws gas through at least one perforated face 11, 12 of the mold 10 and through the nozzle 20.

The nozzle 20 may have an internal cavity having a varying cross section. The nozzle 20 may be displaceable along a first direction. A cross section area of the nozzle 20, measured in a plane parallel to the first direction, may vary as a function of distance from the mold 10. A cross section area of an inner cavity of the nozzle 20, measured in a plane parallel to the first direction, may increase with increasing distance from the mold 10. Increased flow velocities close to the mold in combination with reduced risk of vertex formation in the gas flow pattern may be attained by such configurations.

The nozzle 20 may have an opening facing the mold 10 and an opposite opening at a side facing away from the mold 10. The opening facing the mold 10 may have a cross section area which is less than a cross section area of the opposite opening at a side facing away from the mold 10.

As will be described in more detail below, the system 1 is configured such that, in operation, a relative displacement is effected between the nozzle 20 and the mold 10. The relative displacement may be effected as a function of a filling level of fibers in the mold. A control device 9 of the system 1 may be operative to control the relative displacement between the nozzle 20 and the mold 10 in response to a change in filling level. In order to monitor the filling level and/or a chance in filling level, the control device 9 may monitor a rate at which fibers are supplied into the mold. This may be attained in various ways, e.g. by controlling a fiber supply device 2 which supplies the fibers and/or by sensing the amount of fibers which are inserted into the mold 10. As will be described in more detail below, the system 1 is configured such that the nozzle 20 and the mold 10 are displaceably relative to each other. The system 1 comprises a displacement mechanism which is configured to effect a relative displacement of the nozzle 20 and the mold 10. The displacement mechanism may have various configurations. The displacement mechanism may be configured to displace the nozzle 20, while the mold 10 is kept stationary in a reference frame. The displacement mechanism may be configured to displace the nozzle 20 in a translatory manner along a first direction, while the mold 10 is kept stationary in a reference frame. The displacement mechanism 10 may be configured to displace the nozzle 20 in a translatory manner along a first direction and a second direction transverse to the second direction, while the mold 10 is kept stationary in a reference frame.

The displacement mechanism 10 may be configured to displace the mold 10, while the nozzle 20 is kept stationary in a reference frame. The displacement mechanism may be configured to displace the mold 10 in a translatory manner along a first direction, while the nozzle 20 is kept stationary in a reference frame. The displacement mechanism may be configured to displace the mold 10 in a translatory manner along a first direction and a second direction transverse to the second direction, while the nozzle 20 is kept stationary in a reference frame.

The displacement mechanism 10 may be configured to displace both the mold 10 and the nozzle 20 relative to a reference frame, with the movement of the mold 10 and the nozzle 20 being different. The displacement mechanism 10 may be configured to displace the mold 10 and the nozzle 20 so that they have speeds directed opposite to each other along a first direction. The displacement mechanism 10 may be configured to displace one of the mold 10 and the nozzle 20 in a translatory manner along a first direction, and to displace another one of the mold 10 and the nozzle 20 in a translatory manner along a second direction which is transverse to the first direction.

The displacement mechanism may comprise a guide 21 configured to guide a displacement of the nozzle 20 relative to the mold 10. The guide 21 may be configured to guide a translatory displacement of the nozzle 20 relative to the mold 10. The guide 21 may be arranged to guide a translatory displacement of the nozzle 20 along a first direction which may be parallel to a fiber supply direction along which fibers are supplied into the mold 10.

The guide 21 may have various configurations. The guide 21 may comprise one or at least two guide members. Two guide members may be offset in a direction perpendicular to the first direction along which the nozzle 20 is displaceable. The guide members may comprise guide projections, guide rods, guide recesses, or may have other configurations.

The displacement mechanism may comprise an actuator 22. The actuator 22 may comprise a motor. The motor may be a stepper motor. The actuator 22 may comprise a rotary-to-linear motion conversion mechanism which converts a rotary motion of an output shaft of the motor into a linear displacement of the nozzle 20. The actuator 22 does not need to be implemented as a motor. For illustration, a pneumatic actuator, a hydraulic actuator or other electromotive actuators may be used.

The actuator 22 may be controlled by the control device 9. The control device 9 may be configured to set a relative position of the nozzle 20 and the mold 10 as a function of a filling level of fibers in the mold 10. The control device 9 may be configured to control the actuator 22 to effect a relative translatory displacement between the nozzle 20 and the mold 10 in response to detecting that the filling level of fibers changed so that the nozzle 20 is to be re-aligned with the filling level.

Alternatively or additionally, the actuator 22 may be controlled in dependence on a desired fiber density. By maintaining the nozzle 20 and the mold 10 at the same relative position for a longer period, the fiber density may be selectively increased. A flow velocity of the gas through the nozzle 20 and/or the time at which the nozzle 20 is positioned at a position along the mold 10 determine the density of fibers and allow gradients in fiber density to be established. The gradients in fiber density may in particular be established in a direction which is transverse to the load direction of the fiber cushion. For illustration, regions of higher fiber density may be selectively formed, e.g. for attachment of rigid elements to the seat cushion.

The actuator 22 may cause the nozzle 20 to be displaced along the guide 21, so as to maintain the position at which gas is withdrawn from the mold aligned with a level to which fibers are filled into the mold. The relative displacement 18, performed at least parallel to the fiber supply direction, may maintain the nozzle 20 in alignment with a top layer of fibers in the mold 10.

By using a nozzle 20 and a displacement mechanism configured to effect a translatory displacement between the nozzle 20 and the mold 10, good control over fiber orientation and/or fiber density may be attained.

The system 1 may include additional components. The system 1 may comprise a fiber supply device 2. The fiber supply device 2 may comprise a conveyor which conveys fibers.

The fiber supply device 2 may additionally or alternatively comprise a cutter which is configured to cut one yarn or several yarns into segments to form fibers for insertion into the mold 10. The fiber supply device 2 may comprise at least one yarn supply and a yarn feeder which feeds one yarn or several yarns from the at least one yarn supply to the cutter.

The control device 9 may be coupled to the fiber supply device 2 to control operation thereof. The control device 9 may be configured to control the relative displacement between the nozzle 20 and the mold 10 in a manner which is coordinated with the operation of the fiber supply device 2. The control device 9 may be configured to control the relative displacement between the nozzle 20 and the mold 10 as a function of a rate at which the fiber supply device 2 produces and supplies fibers.

The control device 9 may adjust the relative position between the nozzle 20 and the mold 10 as a function of the amount of fibers produced and supplied by the fiber supply device 2, to thereby maintain an opening of the nozzle 20 in alignment with a top layer of the fibers inserted into the mold 10. The control device 9 may set a position of the nozzle 20 relative to the mold 10 as a function of the total amount of fibers supplied into the mold 10 since production of a batch of fibers was started. The control device 9 may alternatively or additionally incrementally adjust the position of the nozzle 20 relative to the mold 10 as a function of the rate at which fibers are inserted into the mold 10.

The control device 9 may be further configured to set the relative position between the nozzle 20 and the mold 10 as a function of a shape of a cavity 13 of the mold 10 into which fibers are filled. The control device 9 may be configured to set the relative position between the nozzle 20 and the mold 10 as a function of a variation in cross-sectional area of the cavity 13 of the mold 10 into which fibers are filled.

The control device 9 may comprise a storage device or may be coupled to a storage device in which information on the shape of the cavity 13 is stored. The control device 9 may be configured to set the relative position between the nozzle 20 and the mold 10 as a function of the filling level, with the filling level being dependent on the shape of the cavity 13 and the amount of fibers supplied into the mold 10. The control device 9 may be configured to set the relative position between the nozzle 20 and the mold 10 as a function of the filling level, with the filling level being dependent on a variation in cross-sectional area of the cavity 13 as a function of height and the amount of fibers supplied into the mold 10. The control device 9 may be configured to compute the filling level. The control device 9 may additionally or alternative be coupled to at least one sensor which senses the filling level.

The system 1 may comprise a supply path 4 along which fibers 5 are transported into the mold. The supply path 4 may connect the fiber supply device 2, e.g. a cutter, and the mold 10. At least a portion of the supply path 4 may extend along a vertical direction. For illustration, the supply path 4 may comprise a tube which extends vertically above the mold 10.

The control device 9, when controlling the relative displacement between the nozzle 20 and the mold 10, may be configured to take into account the travel time of fibers 5 from the fiber supply device 2 to the filling level of the mold 10. For illustration, the control device 9 may be configured to take into account that fibers produced by a cutter of the fiber supply device 2 arrive at the filling level of the mold 10 with a delay which depends on the length of the path from the cutter to the mold 10. Alternatively or additionally, the control device 9 may be configured to take into account the increase in filling level of the mold 10 when determining the time delay between production of a certain amount of fibers and its arrival at the top layer of fibers in the mold 10.

The system 1 may comprise a gas flow control 3. The gas flow control 3 may control the flow velocity and/or the volume rate of gas flow through the nozzle 20. The gas flow control 3 may comprise at least one ventilator. The at least one ventilator may be arranged so as to be stationary. When the nozzle 20 is movable, the at least one ventilator may be arranged such that the nozzle 20 is displaced relative to the at least one ventilator. The at least one ventilator may also be arranged so as to extend into the nozzle 20, so that the at least one ventilator moves jointly with the nozzle 20.

The gas flow control 3 may additionally be configured to generate a gas flow from the fiber supply device 2 to the mold 10. The gas flow control 3 may adjust the gas flow so as to effect a separation of yarn segments into a plurality of filaments, to thereby form the fibers 5. The control device 9 may be configured to control the flow pattern and/or volume flow rate of gas which transports the fibers from the fiber supply device 2 to the mold 10.

The mold 10 may have various configurations. The mold 10 may comprise at least one half mold having a perforated face 11, 12. The mold 10 may comprise a first half mold having a face 11 with passages for gas flow. The mold 10 may comprise a second half mold having a face 12 with passages for gas flow. The first half mold and the second half mold may be displaceable relative to each other.

The mold 10 may further comprise a support structure 15 for the parts of the mold which define the inner cavity 13 therein. The support structure 15 may be provided separately from the first half mold and the second half mold. The support structure 15 may be configured such that the first half mold and the second half mold defining the cavity 13 therebetween are at least partially thermally insulated from the support structure 15. The first half mold and the second half mold defining the cavity 13 therebetween may have a heat capacity which is less than a heat capacity of the support structure 15.

The mold 10 may be configured such that it is displaceably from the location at which fibers are inserted into the mold 10. The system 1 may comprise a transport system for transporting the mold 10 away from the nozzle 20. The transport system may be configured to transport the mold 10 from the nozzle 20 to a thermal treatment station at which fibers inserted into the mold are thermally activated. The transport system may be configured to transport the mold 10 towards the nozzle 20 to produce a new fiber cushion.

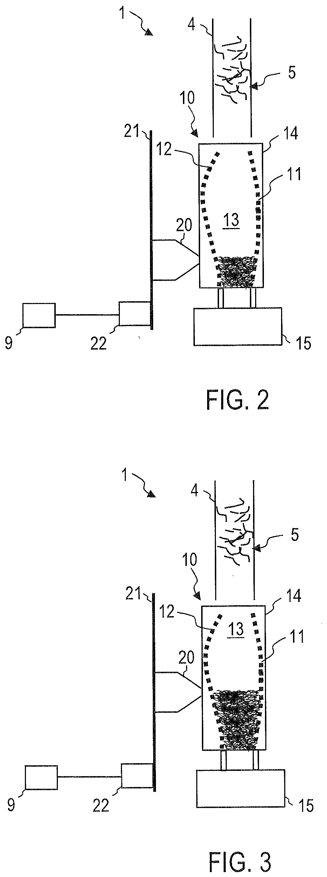

FIG. 2 and FIG. 3 are schematic views which illustrate operation of the system 1. Fibers 5 are filled into a cavity 13 of the mold 10.

The displacement mechanism effects a relative displacement between the nozzle 20 and the mold 10. As illustrated in FIG. 2 and FIG. 3, the relative displacement may be effected by the system 1 in such a way that a nozzle opening of the nozzle 20 facing a perforated face of the mold is displaced in accordance with a change in filling level of fibers in the mold. The relative displacement may be effected by the system 1 in such a way that a nozzle opening of the nozzle 20 is maintained in alignment with a top layer of fibers in the mold 10.

A configuration of a system which comprises a nozzle 20 and a displacement mechanism for effecting a relative displacement between the nozzle 20 and the mold 10 provides various effects. For illustration, a consistent fiber orientation may be attained within the mold 10. The risk of formation of undesired vertices in the gas flow pattern within the mold 10 may be mitigated. The system 1 provides enhanced control over the fiber orientation. For illustration, fiber orientation may be controlled by withdrawing gas from the mold 10 through the nozzle 20. Fibers may be oriented such that, in at least a portion of the cavity 13, fibers are predominantly orientated along a direction which is transverse to the displacement direction 18 of the nozzle 20. The fibers may be predominantly oriented along a main load direction of the fiber product to be formed. The fibers are considered to be "predominantly oriented" along a direction if at least 50 % of the fibers are directed so as to enclose an angle of at most 45° with the respective direction.

By controlling the movement speed of the relative displacement between the nozzle 20 and the mold 10 and/or the volume flow rate of gas through the nozzle 20, the density and the fiber orientation may be varied in the fiber material inserted into the mold 10. For illustration, a locally increased alignment of fibers with the direction in which gas is withdrawn from the mold 10 and/or a locally increased density may be attained by prolonging the dwell time for which the nozzle 20 remains located at the respective location. Alternatively or additionally, a locally increased alignment of fibers with the direction in which gas is withdrawn from the mold 10 and/or a locally increased density may be attained by increasing the volume flow rate while the nozzle 20 remains located at the respective location.

In order to further enhance the control over the fiber orientation, one or several flow guide structures may be incorporated into the nozzle 20. For illustration, several gas flow channels may be defined within the nozzle 20. The several gas flow channels may be at least partially sealed from one another. The several gas flow channels may be formed by one or several tubes, as will be explained in more detail below. Additionally or alternatively, honeycomb structures or other baffle structures may be integrated within the nozzle 20.

The system 1 may comprise one nozzle or more than one nozzle. According to embodiments, the system 1 may comprise at least one further nozzle, with the nozzle 20 and the at least one further nozzle being configured to receive the mold 10 therebetween.

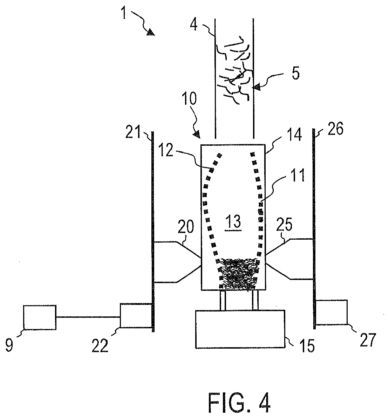

FIG. 4 is a schematic view of a system 1 which includes, in addition to the nozzle 20, at least one further nozzle 25. Elements and features designated with the same reference numerals as in FIG. 1 to FIG. 3 may have any one of the configurations, modes of operation and effects explained with reference to FIG. 1 to FIG. 3. The system 1 may comprise a fiber supply device and/or a gas control as explained with reference to FIG. 1 to FIG. 3.

The further nozzle 25 defines a further location at which gas is withdrawn from the mold 10. The further nozzle 25 may be configured such that, in operation, the system 1 withdraws gas through at least one perforated face 11, 12 of the mold 10 and through the further nozzle 25.

The further nozzle 25 may have an internal cavity having a varying cross section. The further nozzle 25 may be displaceable along a first direction. A cross section area of the further nozzle 25, measured in a plane parallel to the first direction, may vary as a function of distance from the mold 10. A cross section area of an inner cavity of the further nozzle 25, measured in a plane parallel to the first direction, may increase with increasing distance from the mold 10. Increased flow velocities close to the mold in combination with reduced risk of vertex formation in the gas flow pattern may be attained by such configurations.

The further nozzle 25 may have an opening facing the mold 10 and an opposite opening at a side facing away from the mold 10. The opening facing the mold 10 may have a cross section area which is less than a cross section area of the opposite opening at a side facing away from the mold 10.

The displacement mechanism of the system 1 may be configured to effect a relative displacement between the further nozzle 25 and the mold 10. The relative displacement may be effected by displacing the further nozzle 25 relative to the mold 10.

The displacement mechanism may be configured to jointly displace the nozzle 20 and the further nozzle 25. The nozzle 20 and the further nozzle 25 may be arranged in such a way that their relative position is fixed. In this case, the actuator 22 may be used for displacing both the nozzle 20 and the further nozzle 25. Simple construction and control is thereby attained.

The displacement mechanism may be configured such that the further nozzle 25 is displaceable independently of the nozzle 20. This further improves the control attained over the fiber orientation and/or density. The displacement mechanism may comprise a further guide 26 configured to guide a displacement of the further nozzle 25 relative to the mold 10. The further guide 26 may be configured to guide a translatory displacement of the further nozzle 25 relative to the mold 10. The further guide 26 may be arranged to guide a translatory displacement of the further nozzle 25 along a first direction which may be parallel to a fiber supply direction along which fibers are supplied into the mold 10.

The further guide 26 may have various configurations. The further guide 26 may comprise one or at least two guide members. Two guide members may be offset in a direction perpendicular to the first direction along which the further nozzle 25 is displaceable. The guide members may comprise guide projections, guide rods, guide recesses, or may have other configurations.

The displacement mechanism may comprise a further actuator 27. The further actuator 27 may comprise a motor. The motor may be a stepper motor. The further actuator 27 may comprise a rotary-to-linear motion conversion mechanism which converts a rotary motion of an output shaft of the motor into a linear displacement of the further nozzle 25. The further actuator 27 does not need to be implemented as a motor. For illustration, a pneumatic actuator, a hydraulic actuator or other electromotive actuators may be used.

The further actuator 27 may be configured to be controlled independently of the actuator 22. The control device 9 may be configured to control the further actuator 27 in a manner which is coordinates with the actuator 22.

The further actuator 27 may be controlled by the control device 9. The control device 9 may be configured to set a relative position of the further nozzle 25 and the mold 10 as a function of a filling level of fibers in the mold 10. The control device 9 may be configured to control the further actuator 27 to effect a relative translatory displacement between the further nozzle 25 and the mold 10 in response to detecting that the filling level of fibers changed so that the further nozzle 25 is to be re-aligned with the filling level.

Alternatively or additionally, the further actuator 27 may be controlled in dependence on a desired fiber density. By maintaining the further nozzle 25 and the mold 10 at the same relative position for a longer period, the fiber density may be selectively increased. A flow velocity of the gas through the further nozzle 25 and/or the time at which the further nozzle 25 is positioned at a position along the mold 10 determine the density of fibers and allow gradients in fiber density to be established. The gradients in fiber density may in particular be established in a direction which is transverse to the load direction of the fiber cushion. For illustration, regions of higher fiber density may be selectively formed, e.g. for attachment of rigid elements to the seat cushion.

The further actuator 27 may cause the further nozzle 25 to be displaced along the further guide 26, so as to maintain the position at which gas is withdrawn from the mold aligned with a level to which fibers are filled into the mold. The relative displacement, performed at least parallel to the fiber supply direction, may maintain the further nozzle 25 in alignment with a top layer of fibers in the mold 10.

By using a further nozzle 25 and a displacement mechanism configured to effect a translatory displacement between the further nozzle 25 and the mold 10, good control over fiber orientation and/or fiber density may be attained.

One or several flow guide structures may be incorporated into the further nozzle 25. For illustration, several gas flow channels may be defined within the further nozzle 25. The several gas flow channels may be at least partially sealed from one another. The several gas flow channels may be formed by one or several tubes, as will be explained in more detail below. Additionally or alternatively, honeycomb structures or other baffle structures may be integrated within the further nozzle 25.

While two nozzles 20, 25 arranged on opposite sides of the mold 10 are shown in FIG. 4, the system 1 may comprise at least two nozzles arranged along the same perforated face 11, 12 of the mold 10. For illustration, a first plurality of horizontally offset nozzles may be arranged along the further face 12 of the mold 10. A second plurality of horizontally offset nozzles may be arranged along the face 11 of the mold 10.

While the nozzle 20 and/or the further nozzle 25 may be mounted to be displaceable relative to a frame of the system 1, the displacement mechanism may be configured to additionally or alternatively displace the mold 10, as will be explained in more detail with reference to FIG. 5 to FIG. 9.

FIG. 5 is a schematic view of a system 1. Elements and features designated with the same reference numerals as in FIG. 1 to FIG. 4 may have any one of the configurations, modes of operation and effects explained with reference to FIG. 1 to FIG. 4. The system 1 may comprise a fiber supply device and/or a gas control as explained with reference to FIG. 1 to FIG. 4.

The system 1 comprises a nozzle 20, a receptacle to receive the mold 10, and a displacement mechanism configured to effect a relative displacement between the nozzle 20 and the mold 10.

The nozzle 20 may be provided such that it is stationary relative to a frame 8 of the system 1. The system 1 may comprise a mount 24 which mounts the nozzle 20 such that it is stationary relative to the frame 8.

The displacement mechanism may be configured to displace the mold 10 to effect a relative translatory displacement between the nozzle 20 and the mold 10.

The displacement mechanism may be configured to attach to the support 15 of the mold 10, so as to displace the mold relative to the nozzle 20.

The displacement mechanism may comprise a guide 31 configured to guide a displacement of the mold 10 relative to the nozzle 20. The guide 31 may be configured to guide a translatory displacement of the mold 10 relative to the nozzle 20. The guide 31 may be arranged to guide a translatory displacement of the nozzle 20 along a first direction which may be parallel to a fiber supply direction along which fibers are supplied into the mold 10.

The guide 31 may have various configurations. The guide 31 may comprise one or at least two guide members. Two guide members may be offset in a direction perpendicular to the first direction along which the mold 10 is displaceable. The guide members may comprise guide projections, guide rods, guide recesses, or may have other configurations.

The displacement mechanism may comprise an actuator 32. The actuator 32 may comprise a motor. The motor may be a stepper motor. The actuator 32 may comprise a rotary-to-linear motion conversion mechanism which converts a rotary motion of an output shaft of the motor into a linear displacement of the mold 10. The actuator 32 does not need to be implemented as a motor. For illustration, a pneumatic actuator, a hydraulic actuator or other electromotive actuators may be used.

The actuator 32 may be controlled by the control device 9. The control device 9 may be configured to set a relative position of the mold 10 and the nozzle 20 as a function of a filling level of fibers in the mold 10. The control device 9 may be configured to control the actuator 32 to effect a relative translatory displacement between the mold 10 and the nozzle 20 in response to detecting that the filling level of fibers changed so that the nozzle 20 is to be re-aligned with the filling level by displacing the mold 10.

Alternatively or additionally, the actuator 32 may be controlled in dependence on a desired fiber density. By maintaining the nozzle 20 and the mold 10 at the same relative position for a longer period, the fiber density may be selectively increased. A flow velocity of the gas through the nozzle 20 and/or the time at which the nozzle 20 is positioned at a position along the mold 10 determine the density of fibers and allow gradients in fiber density to be established. The gradients in fiber density may in particular be established in a direction which is transverse to the load direction of the fiber cushion. For illustration, regions of higher fiber density may be selectively formed, e.g. for attachment of rigid elements to the seat cushion.

The actuator 32 may cause the mold 10 to be displaced along the guide 31, so as to maintain the position at which gas is withdrawn from the mold aligned with a level to which fibers are filled into the mold. The relative displacement 18, performed at least parallel to the fiber supply direction, may maintain the nozzle 20 in alignment with a top layer of fibers in the mold 10.

By using a nozzle 20 and a displacement mechanism configured to effect a translatory displacement between the nozzle 20 and the mold 10, good control over fiber orientation and/or fiber density may be attained. Further, for a mold 10 which is displaceable along the fiber supply direction, the path which the fibers 5 must traverse from the fiber supply device 1 to the top layer of fibers in the mold 10 may be kept constant. Control may thereby be simplified.

FIG. 6 shows the system 1 of FIG. 5 in another operational state. The displacement mechanism
The displacement mechanism effects a relative displacement between the nozzle 20 and the mold 10 by displacing the mold 10 relative to the nozzle 20. As illustrated in FIG. 5 and FIG. 6, the relative displacement may be effected by the system 1 in such a way that the mold 10 is displaced in accordance with a change in filling level of fibers in the mold. The relative displacement may be effected by the system 1 in such a way that a nozzle opening of the nozzle 20 is maintained in alignment with a top layer of fibers in the mold 10.

A configuration of a system which comprises a nozzle 20 and a displacement mechanism for effecting a relative displacement between the nozzle 20 and the mold 10 provides various effects, as explained above.

By controlling the movement speed of the relative displacement, in this case by displacing the mold 10, and/or the volume flow rate of gas through the nozzle 20, the density and the fiber orientation may be varied in the fiber material inserted into the mold 10. For illustration, a locally increased alignment of fibers with the direction in which gas is withdrawn from the mold 10 and/or a locally increased density may be attained by prolonging the dwell time for which the nozzle 20 remains located at the respective location. Alternatively or additionally, a locally increased alignment of fibers with the direction in which gas is withdrawn from the mold 10 and/or a locally increased density may be attained by increasing the volume flow rate while the nozzle 20 remains located at the respective location.

In order to further enhance the control over the fiber orientation, one or several flow guide structures may be incorporated into the nozzle 20 also when the nozzle 20 is stationary. For illustration, several gas flow channels may be defined within the nozzle 20. The several gas flow channels may be at least partially sealed from one another. The several gas flow channels may be formed by one or several tubes, as will be explained in more detail below. Additionally or alternatively, honeycomb structures or other baffle structures may be integrated within the nozzle 20.

FIG. 7 shows a system 1 which comprises a displacement mechanism configured to displace the mold 10 relative to the nozzle 25. Elements and features designated with the same reference numerals as in FIG. 1 to FIG. 6 may have any one of the configurations, modes of operation and effects explained with reference to FIG. 1 to FIG. 6. The system 1 may comprise a fiber supply device and/or a gas control as explained with reference to FIG. 1 to FIG. 6.

The system 1 comprises at least one further nozzle 25. The at least one further nozzle 25 may be mounted such that it is stationary relative to a frame 8 of the system 1. The at least one further nozzle 25 may be maintained stationary by a mount 28.

The nozzle 20 and the further nozzle 25 may be arranged to receive the mold 10 therebetween. The displacement mechanism may be configured to effect a displacement of the mold 10 relative to both the nozzle 20 and the further nozzle 25 by displacing the mold 10.

The displacement mechanism and the control device 9 may be configured as explained with reference to FIG. 6.

In a system which comprises at least one further nozzle 25 in addition to the nozzle 20, as explained with reference to FIG. 4 and FIG. 7, the gas flows through the nozzle 20 and the at least one further nozzle 25 may be independently controllable. For illustration, the control device 9 may be configured to control gas volume flow rates through the nozzle 20 and the at least one further nozzle 25 independently of each other. The system 1 may comprise a plurality of ventilators, with separate ventilators being in fluid communication with the nozzle 20 and the further nozzle 25. The control device 9 may be configured to control at least two of the ventilators independently to independently control the volume gas flow rates the nozzle 20 and the at least one further nozzle 25.

Independent control over the volume gas flow rates may be desirable for various applications, including the formation of locally increased density of fibers. For illustration, by setting the volume flow rate to be higher for the nozzle 20 than for the at least one further nozzle 25, increased fiber density can be attained at the face 12 of the mold 10 through with the nozzle 10 withdraws gas. Additionally or alternatively, by setting the volume flow rate to be lower for the nozzle 20 than for the at least one further nozzle 25, decreased fiber density can be attained at the face 12 of the mold 10 through with the nozzle 10 withdraws gas.

In any one of the embodiments explained with reference to FIG. 1 to FIG. 7, the mold 10 may be received in a receptacle of the system 1. The receptacle may include an adapter 14 that interconnects the perforated face(s) of the mold 10 with the nozzle 20 and, if present, the at least one further nozzle 25. The adapter 14 may comprise flow guides, which may include one or several tubes, honeycomb structures or other flow guides which guide gas from the perforated face(s) 11, 12 of the mold to the nozzle 20. The generation of laminar flow patterns may thereby be improved.

Additionally or alternatively, the nozzle 20 and, if present, the at least one further nozzle 25 may be configured such that they are displaceable towards and away from the mold 20. The nozzle 20 and, if present, the at least one further nozzle 25 may be configured such that they are displaceable towards and away from the mold 20 in a translatory manner. This allows the nozzle 20 to follow a contour of a perforated face 11, 12 of the mold 10 as the filling level changes.

FIG. 8 shows a system 1 which comprises a displacement mechanism configured to displace at least the nozzle 20. Elements and features designated with the same reference numerals as in FIG. 1 to FIG. 7 may have any one of the configurations, modes of operation and effects explained with reference to FIG. 1 to FIG. 7. The system 1 may comprise a fiber supply device and/or a gas control as explained with reference to FIG. 1 to FIG. 7.

The displacement mechanism may be configured to displace at least one of the nozzle 20 and the mold 10 in a first direction 18. The first direction 18 may be vertical and may be parallel to the fiber supply direction.

The displacement mechanism may additionally be configured to displace at least the nozzle 20 in a second direction 19 which is transverse to the first direction 18. The displacement mechanism may thus be configured to effect a relative translatory displacement between the nozzle 20 and the mold 10 in at least two directions, which may be orthogonal to each other.

The displacement mechanism may have various configurations to attain this operation. For illustration, robotic movement mechanisms may be used. Alternatively or additionally, the nozzle 20 may be mounted to a support 37 which is displaceable along a guide 36. Displacement of the support 37 along the guide 36 may be effected by the actuator 22 which may be configured as explained with reference to FIG. 1 to FIG. 4.

The displacement mechanism may comprise a further actuator 38 configured to effect a translatory displacement along the second direction 19. The further actuator 38 may be controlled by the control device 9. The control device 9 may be configured to control the further actuator 38 independently from, but coordinated with the actuator 22.

The further actuator 38 may be a motor. A rotary to linear motion conversion mechanism may convert a rotary motion of an output shaft of the motor to a linear displacement of the nozzle 20 along the second direction 19.

By controlling the further actuator 38 in dependence on the height at which the nozzle 20 is positioned relative to the mold 10, the gas inlet opening of the nozzle 20 may be kept in close proximity to a perforated face 12 of the mold 10. Efficient control over fiber orientation and/or density is attained.

The displacement mechanism may be configured to displace the nozzle 20 along both the first direction 18 and the second direction 19 relative to the mold 10. The displacement may respectively be a translatory displacement.

When the system 1 comprises a nozzle 20 and a further nozzle 25 configured to receive the mold 10 therebetween, both the nozzle 20 and the further nozzle 25 may be displaceable in the second direction 19 which is transverse to the fiber supply direction. The displacement mechanism may be configured to displace the nozzle 20 and the further nozzle 25 independently from each other along at least the second direction, even when the nozzle 20 and the further nozzle 25 are mounted to a common carrier.

In other implementations, the displacement mechanism may be configured to displace the mold 10 relative to the frame 8 along one of the first direction 18 and the second direction 19, and to displace the nozzle 20 relative to the frame along at least the other one of the first direction 18 and the second direction 19. An exemplary implementation of such a system is shown in FIG. 9.

FIG. 9 shows a system 1 which comprises a displacement mechanism configured to displace both the mold 10 and the nozzle 20. Elements and features designated with the same reference numerals as in FIG. 1 to FIG. 8 may have any one of the configurations, modes of operation and effects explained with reference to FIG. 1 to FIG. 8. The system 1 may comprise a fiber supply device and/or a gas control as explained with reference to FIG. 1 to FIG. 8.

The displacement mechanism may be configured to displace the mold 10 in a first direction 18. The first direction 18 may be vertical and may be parallel to the fiber supply direction. The nozzle 20 may be mounted such that it is not displaceable along the first direction 18.

The displacement mechanism may additionally be configured to displace at least the nozzle 20 in a second direction 19 which is transverse to the first direction 18. The displacement mechanism may thus be configured to effect a relative translatory displacement between the nozzle 20 and the mold 10 in at least two directions, which may be orthogonal to each other.

The displacement mechanism may have various configurations to attain this operation. For illustration, robotic movement mechanisms may be used. Alternatively or additionally, the nozzle 20 may be mounted to a support 37 which is stationary along the first direction 18. Displacement of the mold 10 along the guide 31 may be effected by the actuator 32 which may be configured as explained with reference to FIG. 5 or FIG. 6.

The displacement mechanism may comprise a further actuator 38 configured to effect a translatory displacement of the nozzle 20 relative to the mold 10 along the second direction 19. The further actuator 38 may be controlled by the control device 9. The control device 9 may be configured to control the further actuator 38 independently from, but coordinated with the actuator 32.

The further actuator 38 may be a motor. A rotary to linear motion conversion mechanism may convert a rotary motion of an output shaft of the motor to a linear displacement of the nozzle 20 along the second direction 19.

By controlling the further actuator 38 in dependence on the height at which the mold 10 is positioned, the gas inlet opening of the nozzle 20 may be kept in close proximity to a perforated face 12 of the mold 10. Efficient control over fiber orientation and/or density is attained.

The system 1 of any one of the various embodiments explained with reference to FIG. 1 to FIG. 9 above may comprise structures which improve the formation of a laminar flow of gas from the nozzle 20 and/or which reduce vertex formation in the gas flow pattern at the nozzle 20.

The system 1 of any one of the various embodiments explained with reference to FIG. 1 to FIG. 9 may comprise a flow harmonizing structure which may be interposed between the nozzle 20 and a ventilator or other suction device. A plurality of channels may be defined downstream of the inlet opening of the nozzle 20. If a further nozzle 25 is present, a further plurality of channels may be defined downstream of the inlet opening of the further nozzle 25.

The plurality of channels may have various configurations. The plurality of channels may be defined by tubes. The tubes may be flexible tubes or may be rigid tubes. The plurality of channels may be defined by a honeycomb structure. The plurality of channels may be defined by a plurality of baffles arranged downstream of an inlet opening of the nozzle 20 and, optionally, the further nozzle 25.

Exemplary implementations of such configurations of embodiments will be explained in more detail with reference to FIG. 10 to FIG. 14.

FIG. 10 is a cross sectional partial view of a system according to an embodiment. The system comprises a nozzle 20 which may be configured for relative displacement relative to the mold 10.

The system 1 comprises a suction device 71. The suction device 71 is configured to generate a gas flow through the nozzle 20. The suction device 71 may be configured to generate a difference in static gas pressure between a suction channel 70 and the mold 10 which causes gas to be drawn through the nozzle 20 into the suction channel 70.

The suction device 71 may be implemented as a ventilator. The ventilator may be arranged so as to be spaced from the nozzle 20.

The system 1 may comprise a plurality of channels 50. The plurality of channels 50 may be arranged downstream of the inlet opening of the nozzle 20. The plurality of channels 50 may be arranged at and connected to an outlet opening of the nozzle 20 through which gas leaves the nozzle 20.

The plurality of channels 50 may be configured to define a tapering change which reduces the cross-sectional area at which gas may enter the plurality of channels 50 to a smaller cross-sectional area which is interfaced with the suction channel 70.

The plurality of channels 50 may have a plurality of inlet openings 41-45. The plurality of channels may have a plurality of outlet openings 62, 64. Each outlet opening 62, 63 may be respectively associated with only one of the inlet openings 41-45. The plurality of channels 50 may be configured such that it communicates each one of the inlet openings with one, and only one, of the plurality of outlet openings 62, 64.

The plurality of inlet openings 41-45 may be formed on a first end member 50. The first end member 40 may be arranged to allow the nozzle 20 to slide along the first end member 40.

The plurality of outlet openings 62, 64 may be formed on a second end member 60. The second end member 60 may be arranged on the suction channel 70. The second end member 60 may be arranged to prevent passage of gas through the second end member 60 at any location outside of the plurality of outlet openings 62, 64.

The plurality of inlet openings 41-45 and/or the plurality of outlet openings 62, 64 may respectively be arranged in a two-dimensional array. The plurality of inlet openings 41-45 may include inlet openings offset from each other along a horizontal direction. The plurality of outlet openings 62, 64 may include outlet openings offset from each other along a horizontal direction.

The second end member 60 may cover an area which is smaller than an area covered by the first end member 40. The plurality of channels 50 may be operative to guide gas withdrawn from the mold and passed through any one of the inlet openings 41-45 provided at the larger area of the first end member 40 to corresponding ones of the outlet openings 62, 64 provided in the smaller area of the second end member 60. The generation of higher flow velocities is facilitated by the configuration in which the suction channel 70 may have a cross-sectional area smaller than, and possibly much smaller than, the area of a face 12 of the mold 10 through which gas is withdrawn into the nozzle 20.

The plurality of channels 50 may communicate the inlet openings 41-45 with the outlet openings 62, 64. The nozzle 20 may define through which one(s) of the plurality of channels 50 gas is withdrawn from the mold is guided.

The system 1 may comprise a closure mechanism which selectively increases the flow resistance through a fraction of the plurality of channels 50. The system 1 may be configured to block air flow through the fraction of the plurality of channels 50. The fraction of channels which is blocked may be varied as a function of time. The fraction of channels which is blocked may be varied as a function of filling level of fibers in the mold 10. The fraction of channels which is blocked may be varied as a function of the relative position of the nozzle 20 and the mold 10.

The closure mechanism may have various configurations. One or several mechanical, electromechanical or pneumatic closure elements may be provided to selectively close and open channels 50. One exemplary implementation of a closure mechanism of a system according to an embodiment will be explained in more detail with reference to FIG. 11.

FIG. 11 is a cross sectional partial view of a system according to an embodiment. Elements and features designated with the same reference numerals as in FIG. 10 may have any one of the configurations, modes of operation and effects explained with reference to FIG. 10.

The system 1 of FIG. 11 comprises a closure mechanism configured to selectively close a fraction of the plurality of channels 41-45. The closure mechanism may comprise at least one closure member 46, 47. The at least one closure member 46, 47 may comprise a plurality of slats. The plurality of slats may be hingedly coupled to each other.

The at least one closure member 46, 47 may be configured to cover at least a fraction of the plurality of inlet openings 41-45. The at least one closure member 46, 47 may be configured to cover different groups of the inlet openings 41-45 when the at least one closure member 46, 47 is displaced.

The plurality of inlet openings 41-45 may be arranged in plurality of rows. The plurality of rows may be vertically spaced from each other. The at least one closure member 46, 47 may be configured such that only a part of the rows is kept clear from the at least one closure member 46, 47 so that the flow resistance is not increased, this part of the rows being in communication with the nozzle 20.

The at least one closure member 46, 47 may be mounted for sliding displacement along the first end member 40. The row(s) of inlet openings 41-45 which are kept clear from the least one closure member 46, 47 may be varied by sliding displacement of the at least one closure member 46, 47. If the at least one closure member 46, 47 consists of a plurality of slats which are hingedly coupled to each other, the slats may be guided to bend at the upper and lower ends of the first end member 40 to reduce construction space.

The at least one closure member 46, 47 may be displaced as a function of filling level of fibers in the mold. The at least one closure member 46, 47 may be coupled to the nozzle 20. Displacement of the nozzle 20 relative to the mold 10 may cause the at least one closure member 46, 47 to be displaced, thereby opening different ones of the plurality of channels 50 as a function of filling level of fibers in the mold 10.

A system comprises a plurality of channels through which gas is guided as it is withdrawn from the mold through the nozzle 20 may offer various benefits. Laminar flow of gas offers improved control over fiber orientation. A reduction in cross sectional area from a face 11, 12 of the mold 10 to the suction channel 70 in combination with the nozzle 20 facilitates the generation of high flow velocities, to efficiently orient fibers.

While the closure mechanism may be configured to selectively allow gas to pass through different ones of several rows of inlet openings 41-45, the system 1 may additionally or alternatively comprise a mechanism which allows flow resistance through the nozzle 20 to be controlled along a horizontal direction. For illustration, one or several controllable passages may be integrated into the nozzle 20 to generate a gas velocity profile which varies along a horizontal direction.

While a suction channel 70, suction device 71, and plurality of channels 50 are illustrated in FIG. 10 and FIG. 11 in association with one nozzle 20, a further suction channel, a further suction device, and a further plurality of channels which interconnect the further nozzle 25 to the further suction channel may be provided if the system 1 includes more than one nozzle.

FIG. 12 to FIG. 14 are perspective views of a system 1 which includes a nozzle 20 and a further nozzle 25. Elements and features designated with the same reference numerals as in FIG. 1 to FIG. 11 may have any one of the configurations, modes of operation and effects explained with reference to FIG. 1 to FIG. 11.

The system 1 comprises a nozzle 20 and a further nozzle 25. The nozzle 20 and the further nozzle 25 may be displaceably mounted. A displacement mechanism (not shown in FIG. 12 to FIG. 14) may be configured to effect a relative displacement between the nozzle 20 and a mold 10 interfaced with an adapted 14. The displacement mechanism may be configured to effect a relative displacement between the further nozzle 25 and the mold 10 interfaced with an adapted 14.

The nozzle 20 and the further nozzle 25 may respectively be communicated with at least one suction channel 70.

A plurality of channels 50 may communicate the nozzle 20 with the suction channel 70. Gas may flow from the nozzle 20 through the suction channel 70 through a sub-set of the plurality of channels 50, with the sub-set being dependent upon a relative position of the nozzle 20 relative to the mold 10. When the relative position changes in response to a change in filling level of fibers in the mold, the sub-set of channels 50 through which gas is guided may change.

A closure mechanism may selectively increase a flow resistance for a gas flow through a fraction of the plurality of channels 50. Channels which are not in direct fluid communication with the nozzle 20 may thus be selectively blocked to reduce gas flow.

The plurality of channels 50 may comprise tubes 51, 52, channels delimited by baffles, or other channel configurations. For illustration, honeycomb structures may be used to interface the nozzle 20 with the suction channel 70.

A plurality of further channels 50' may communicate the further nozzle 25 with the further suction channel 70'. Gas may flow from the further nozzle 25 through the further suction channel 70' through a sub-set of the plurality of further channels 50', with the sub-set being dependent upon a relative position of the further nozzle 25 relative to the mold 10. When the relative position changes in response to a change in filling level of fibers in the mold 10, the sub-set of further channels 50' through which gas is guided may change.

A closure mechanism may selectively increase a flow resistance for a gas flow through a fraction of the plurality of channels 50'. Channels which are not in direct fluid communication with the further nozzle 25 may thus be selectively blocked to reduce gas flow.

The plurality of further channels 50' may comprise tubes 53, 54, channels delimited by baffles, or other channel configurations. For illustration, honeycomb structures may be used to interface the further nozzle 25 with the further suction channel 70'.

While a ventilator or other suction device may be installed so as to be spaced from the nozzle 20 and, if present, the at least one further nozzle 25, one or several suction devices may respectively be provided on the nozzle 20 and, if present, the at least one further nozzle.

FIG. 15 and FIG. 16 are perspective views of a system 1 which includes a nozzle 20 and a further nozzle 25. Elements and features designated with the same reference numerals as in FIG. 1 to FIG. 14 may have any one of the configurations, modes of operation and effects explained with reference to FIG. 1 to FIG. 14.

The system 1 comprises a nozzle 20 and a further nozzle 25. A displacement mechanism (not shown in FIG. 12 to FIG. 14) may be configured to effect a relative displacement between the nozzle 20 and a mold 10 interfaced with an adapted 14. The displacement mechanism may be configured to effect a relative displacement between the further nozzle 25 and the mold 10 interfaced with an adapted 14.

A suction device 80 may be provided on the nozzle 20. The suction device 80 may comprise a plurality of ventilators 81-85. The plurality of ventilators 81-85 may be provided on the nozzle 20. The plurality of ventilators 81-85 may be mounted so as to be displaceable jointly with the nozzle 20 if the nozzle 20 is displaceable. The plurality of ventilators 81-85 may be configured to generate an air flow through the nozzle 20.

The control device 9 may be configured to control the plurality of ventilators 81-85 as a function of filling level of fibers in the mold 10. The control device 9 may be configured to control a volume flow of gas through the nozzle as a function of filling level of fibers in the mol by controlling the plurality of ventilators 81-85.

The plurality of ventilators 81-85 may be independently controllable. The control device 9 may be configured to adjust a horizontally varying gas velocity profile at the nozzle inlet opening by controlling the plurality of ventilators 81-85.

A further suction device 80' may be provided on the further nozzle 25. The further suction device 80' may comprise a plurality of ventilators 86-87. The plurality of ventilators 86-87 may be provided on the further nozzle 25. The plurality of ventilators 86-87 may be mounted so as to be displaceable jointly with the further nozzle 25 if the further nozzle 25 is displaceable. The plurality of ventilators 86-87 may be configured to generate an air flow through the further nozzle 25.

The control device 9 may be configured to control the plurality of ventilators 86-87 as a function of filling level of fibers in the mold 10. The control device 9 may be configured to control a volume flow of gas through the nozzle as a function of filling level of fibers in the mol by controlling the plurality of ventilators 86-87.

The plurality of ventilators 86-87 may be independently controllable. The control device 9 may be configured to adjust a horizontally varying gas velocity profile at the nozzle inlet opening by controlling the plurality of ventilators 86-87.

The suction device(s) 80, 80' may have configurations different from the ones shown in FIG. 15 and FIG. 16. For illustration, different numbers of ventilators or different mechanisms to generate a gas flow may be used.

The control device 9 may be configured to control the suction device 80 which generates a gas flow through the nozzle 20 and the further suction device 80' which generates a gas flow through the further nozzle 25 independently of each other. The control device 9 may control the suction device 80 such that it produces a first volume flow rate of gas through the nozzle 20. The control device 9 may control the further suction device 80' such that it produces a second volume flow rate of gas through the further nozzle 25. The control device 9 may be configured to control both the first volume flow rate and the second volume flow rate as a function of the filling level of fibers in the mold 10. The control device 9 may be configured to control the suction device 80 and the further suction device 80' such that, for at least one relative position between the nozzle 20, the further nozzle 25 and the mold 10, the first volume flow rate and the second volume flow rate are different from each other.

Such configurations allow the density and/or degree of fiber orientation to be controlled, so as to generate controlled variations in fiber density and/or fiber orientation of the fibers in the mold 10.

FIG. 17 shows a system 1 according to an embodiment. The system 1 comprises a fiber supply device 2 which includes a cutter system. The rate at which fibers are produced by the cutter may determine the rate at which the filling level of the fibers in the mold changes. The displacement mechanism may effect a relative displacement between the nozzle 20 and the mold 10 in response to the change in filling level.

The system 1 may use yarn(s) as raw material, cuts the yarns into segments to produce binding fibers and matrix fibers, and transports the binding fibers and matrix fibers into a mold 10. In the mold 10, at least the binding fibers may be thermally activated. A seat cushion body or other product may thereby be formed as an integral body of cross-linked fibers. Cross-linking may be attained by thermal activation of the binding fibers. The product may be formed such that the fibers in at least a portion of the seat cushion body are predominantly oriented along a main load direction of the seat cushion body.

The system 1 may comprise a cutter system 100 configured to cut one or more yarns to produce the fiber material from which the seat cushion body is formed. The system 1 may comprise a transport mechanism 110 configured to transport the fibers away from cutting blades of the cutter system 100 and into the mold 10.

The system 1 may comprise a yarn supply device 90 configured to supply the one or more yarns 10 to the cutter system 100. The yarn supply device 90 may include one or more spools 91, 92 of yarn. The spools 91, 92 may be formed from the same yarn or from different yarns. Each spool 91, 92 may be mounted on a rotatably supported which may be driven by a power drive 93 to play out yarn from the spools 91, 92.

The yarn supply device 90 may have an enclosure 97 in which the spool(s) 91, 92 of yarn are housed. Environmental parameters of the yarn when stored within the enclosure 97 may be controlled by an atmosphere control device 96 of the yarn supply device 90. The enclosure 97 has an atmosphere within its interior. The atmosphere control device 96 may be configured to control air humidity and/or a temperature of the atmosphere within the enclosure 97.

The atmosphere control device 96 may be configured to control the air humidity and temperature within the enclosure 97 in which the yarn is stored such that the yarn(s) supplied by the yarn supply device 90 have a material humidity of at least 2,5 %. This has proven to result in seat cushion bodies providing good comfort when the yarn(s) are cut to produce the fiber material.

The yarn supply device 90 may comprise at least one channel 94, 95 which extends towards the cutter system 100. The at least one channel 94, 95 may be in fluid communication with the atmosphere which is maintained within the enclosure of the yarn supply device 90. The at least one channel 94, 95 may be configured as a tube extending from the enclosure 97. The yarn(s) 10 may be guided in the at least one channel 94, 95. The yarn(s) 98 may be conveyed from the yarn supply device to the cutter system 100 through the channels 94, 95 in such a manner that the yarn(s) 98 are exposed to ambient atmosphere for at most a short distance of their transport to cutting blades of the cutter system.

The yarn(s) 98 may respectively be composed of a plurality of filaments. The filaments may be staple fibers or endless filaments. Filaments of different cross sections, materials and/or diameters may be included in the yarn(s) 98.

While two yarns 98 and two spools 91, 92 of yarn are shown in FIG. 17, other numbers of yarns may be used. For illustration, at least four yarns may be supplied from the yarn supply device 90 to the cutter system 100. The yarn supply device 90 may be configured to output four or more than four yarns to the cutter system 100. The yarn supply device 90 may be configured to output from four to sixteen yarns to the cutter system 100.

The cutter system 100 may be configured to cut the yarns supplied thereto into segments. Both binding fibers and matrix fibers for forming the seat cushion body may be produced by cutting the yarn(s) into segments. At least some of the yarn(s) may consist of a blend of different materials such that segments of a first filament may act as matrix fibers and segments of a second filament may act as matrix fibers.

The cutter system 100 may comprise one or more cutting blades 103, 104 for cutting the yarn(s) into segments. For illustration, a rotating cutting blade 103, 104 may be provided for cutting the yarn 10. A cutting head which includes the rotating cutting blade 103, 104may include a fixed or counter rotating cutting edge, with the yarn 10 being cut into segments between the rotating cutting blade 103, 104 and the cutting edge. A sensor may be used to measure the forces and/or torques acting onto the cutting blade 103, 104. Operation of the cutting head may be controlled based on the measured forces and/or torques.

Each cutting head may include a channel for guiding the yarn therethrough. The channel may be configured such that the yarn is advanced towards the respective cutting blade 103, 104 by a gas stream. The gas stream may be generated by the rotation of the respective cutting blade 103, 104, which gives rise to a pressure difference between the outlet of the channel and the inlet of the channel. The pressure difference establishes a gas stream, which advances the yarn towards the cutting head.

A drive 105 is configured to rotationally drive the cutting blades 103, 104 of the cutter system 100. The drive 105 may be controlled by a control device 106. The control device 106 may control the operation of the cutting blades 103, 104 and operation of a yarn feeder 101 of the cutting station in a coordinated manner. The control device 106 may optionally also control the drive 93 of the yarn supply device 90.

The cutter system 100 may comprise a yarn feeder 101. The yarn feeder 101 may include a transport belt or other transport mechanism which advances the yarn(s) 10 from the output of the yarn supply device 90 to a cutting station 102 which includes the rotating cutter blades 103, 104. The yarn feeder 101 may be configured to receive the yarn(s) 10 at a discharge opening of the tubes 94, 95 and to convey the yarn(s) 10 to the cutting station 102. The yarn feeder 101 may comprise one or several conveyer belts, grippers which grip and advance the yarn(s) 10 or other conveying devices.

The cutter system 100 produces fiber material which is cut from the yarn(s) 10. Yarn segments cut from the yarn(s) 10 may at least partially be opened into segments of their filaments by the cutting action of the cutter system 100. The cutter system may comprise an opening mechanism which opens the yarn segments into their filament segments, so as to produce individual filament segments.

The cutter system 100 may be configured such that the lengths of the segments may be adjusted, thereby producing fiber material with fibers of different lengths. The length of the fibers may be adjusted in a controlled way in dependence on the filling level of the fiber material in the mold 10.

The filling station 10 may comprise a transport mechanism 110 which transports the fiber material from an output of the cutter system 100 into the mold 10. The transport mechanism 110 may have any one of a variety of configurations. For illustration, mechanically moving conveying elements may be used. The transport mechanism 110 may be configured to generate a gas flow, in particular an air flow, to transport the fiber material from an output of the cutter system 100 to the mold 10 through an adapter of the filling station. The transport mechanism 110 may comprise one or several gas flow control devices 111 which are operative to establish a gas flow from the output of the cutter system 100 to the mold 10. Each of the gas flow control devices 110 may comprise a ventilator or another actuator which is operative to generate a gas flow.

The transport mechanism 110 may be configured to establish a laminar air flow 114 in a guide channel 113. The air flow 114 transports the fiber material away from the cutter system. In the mold 10, the air flow may be deflected so as to exit the mold through openings in the mold 10. Fibers may be oriented in the mold 10 by this air flow pattern. The location at which air is withdrawn from the mold 10 may be defined by the relative position of the nozzle 20 and the mold 10 and/or by the relative position of the at least one further nozzle 25 and the mold 10.

The transport mechanism 110 may be configured to assist in separating the cut yarn segments into their constituent filaments. The transport mechanism 110 may generate a flow pattern 112 which assists in separating the cut yarn segments into the segments of their constituent filaments. The transport mechanism 110 may be configured to generate a turbulent or laminar flow field 112 which assists in separating filament segments of the yarn segments from one another. The transport mechanism 110 may comprise one or several mechanical elements arranged in the transport path of the fiber material to assist in separating the cut yarn segments into the segments of the constituent filaments.

The system 1 may comprise the control device 9. The control device 9 may be interfaced with a cutter control device 106 of the cutter system 100. The control device 9 may be interfaced with the yarn supply device 90 and/or the transport mechanism 110.

The control device 9 may control operation of the yarn supply device 90 and the displacement mechanism in a coordinated manner. Additionally or alternatively, the control device 9 may control operation of the cutter system 100 and the displacement mechanism in a coordinated manner. The control device 9 may control operation of the yarn supply device 90, the cutter system 100, and the displacement mechanism in a coordinated manner.

The control device 9 may be configured to control the relative displacement between the at least one nozzle 20, 25 and the mold 10 as a function of a rate at which the cutter system 100 produces the fiber material. The control device 9 may perform open loop control or closed loop control to control the relative displacement between the at least one nozzle 20, 25 and the mold 10 as a function of filling level of the mold.

The system 1 may comprise a thermal treatment device for thermally activating the fibers in the mold 10. The system 1 may be configured to displace the mold 10 away from the nozzle 20 and/or the further nozzle 25 before the fibers are thermally activated.

The system 1 may comprise a post-processing device for post-processing the fiber cushion body after thermal activation of fibers. The post-processing device may be configured to re-shape the fiber cushion body, to attach a trim material to the fiber cushion body, or to perform other post-processing operations.

FIG. 18 is a flow chart of a method 120 according to an embodiment. The method 120 may be performed by a system 1 according to an embodiment.

At 121, fibers are filled into the mold 10. The fibers may be filled into the mold 10 as loose fiber material. The loose fiber material may include fiber flocks and/or individual filaments which form the fibers. The loose fiber material may be configured such that it does not include thermally cross-linked layers of fiber material.

The fibers may comprise at least two different types of fibers. The at least two different types of fibers may comprise matrix fibers and binding fibers. The matrix fibers and the binding fibers may be distinguished from each other in at least one of material, weight per length, and cross-section. The binding fibers may be bi-component (BiCo) fibers.

At 122, it is determined whether a relative position between at least one nozzle 20, 25 and the mold 10 is to be adjusted in response to a change in filling level. The control device 9 may determine whether the at least one nozzle 20, 25 is to be re-aligned with the top layer of fibers in the mold 10. The control device 9 may perform an open or closed loop control in which the relative position between the at least one nozzle 20, 25 and the mold 10 is controlled.

If the relative position between at least one nozzle 20, 25 and the mold 10 is not to be adjusted, the method may continue at 121. I

At 123, if the relative position between at least one nozzle 20, 25 and the mold 10 is to be adjusted, the displacement mechanism may effect a relative displacement between the at least one nozzle 20, 25 and the mold 10.

In order to effect the relative displacement, the at least one nozzle 20, 25 may be displaced while the mold 10 may be kept stationary in a reference frame. The displacement mechanism may displace the at least one nozzle 20, 25 in a translatory manner along a first direction, while the mold 10 is kept stationary in a reference frame. The displacement mechanism 10 may displace the at least one nozzle 20, 25 in a translatory manner along a first direction and a second direction transverse to the second direction, while the mold 10 is kept stationary in a reference frame.

In order to effect the relative displacement, the mold 10 may be displaced, while the at least one nozzle 20, 25 is kept stationary in a reference frame. The displacement mechanism may displace the mold 10 in a translatory manner along a first direction, while the at least one nozzle 20, 25 is kept stationary in a reference frame. The displacement mechanism may displace the mold 10 in a translatory manner along a first direction and a second direction transverse to the second direction, while the at least one nozzle 20, 25 is kept stationary in a reference frame.

The displacement mechanism 10 may displace both the mold 10 and the at least one nozzle 20, 25 relative to a reference frame, with the movement of the mold 10 and the at least one nozzle 20, 25 being different. The displacement mechanism 10 may displace the mold 10 and the at least one nozzle 20, 25 so that they have speeds directed opposite to each other along a first direction. The displacement mechanism 10 may displace one of the mold 10 and the at least one nozzle 20, 25 in a translatory manner along a first direction, and may displace another one of the mold 10 and the at least one nozzle 20, 25 in a translatory manner along a second direction which is transverse to the first direction.

The relative displacement may be effected in such a way that it maintains the at least one nozzle 20, 25 in a desired relation relative to the top layer of fibers in the mold 10.

At 124, it is determined whether filling of fibers in the mold 10 is completed. If a batch required for production of the fiber product is not completely filled into the mold, the method may return to 121. Otherwise, the method may continue at 125.

At 125, filling of fibers into the mold 10 may be interrupted at least intermittently.

At 126, the fibers filled into the mold may be thermally activated. Thermal activation may comprise activating at least a low-melt component of the binding fibers.

A fiber cushion body may be formed as an integral product by the thermal activation. The control over fiber orientation attained using the systems and method of embodiments provides resilient characteristics in association with breathability and durability. In at least a portion of the fiber cushion body, fibers may be predominantly oriented along a main load direction in the sense that at least 50 % of the fibers enclose an angle of at most 45° with the main load direction.

At 127, the fiber cushion body may optionally undergo post-processing. Post-processing may include re-shaping the fiber cushion body, e.g. by ultrasound. Post-processing may include attaching a trim material to the fiber cushion body. Post-processing may include installing the fiber cushion body in a seat. The fiber cushion body may be installed in the seat to provide a support surface for the user's thighs. The fiber cushion body may be installed in a backrest of the seat to provide a support surface for the user's back.

The seat may be a vehicle seat. The method may comprise installing the vehicle seat in a vehicle. The seat may be a residential or office seating furniture.

FIG. 19 is a detailed cross-sectional view through a seat cushion body 131 produced by the system 1 or method according to an embodiment. The cross-sectional view of FIG. 19 is taken along a plane which is perpendicular to major faces of the seat cushion body 131 and parallel to a main load direction of the seat cushion body 131. The seat cushion body 131 may be configured to provide resilient characteristics when a force directed along a main load direction 132 is exerted onto the seat cushion body 131.

The seat cushion body 131 may have two major faces 133, 134 which are arranged so as to be opposite to each other on the seat cushion body 131. The major faces 133, 134 may have an approximately planar shape, extending essentially perpendicularly to the main load direction 132. The seat cushion body 131 may be configured such that the main load direction 132 defines a normal to the plane of the major faces 133 and 134. Protrusions or recesses (not shown in FIG. 19) may be provided on the major faces to define attachment regions for structural or functional seat components.

The seat cushion body 131 may be a unitary body which is integrally formed from thermally cross-linked fibers. The fiber material forming the seat cushion body may include at least two different types of fibers, namely a binding fiber and a matrix fiber. The binding fiber and the matrix fiber may be produced by cutting yarns into segments. The binding fiber is a fiber which can be thermally activated by supplying heat thereto. Upon thermal activation, at least a low melt portion of binding fibers melts, thereby causing a matrix of fibers to form. Various known fiber types may be used as binding and matrix fibers. The fiber material from which the seat cushion body is formed may include fibers that can be obtained from recycling material and/or which can be recycled in an efficient manner. The binding fibers may be bi-component (BiCo) fibers. The binding fibers may have a thermal activation temperature which is lower than a melting temperature of the matrix fibers. According to exemplary embodiments, the binding fibers may be BiCo fibers having a core of polyester or polyamide, and having a coating of polyamide or modified polyester. The BiCo fibers may have a trilobal shape in cross-section. The matrix fibers may be formed from polyester or polyamide and have a melting temperature higher than at least the melting temperature of the coating of the binding fibers. The matrix fibers may have a linear mass density of preferably in between 13 and 130 dtex. The binding fibers may have a preferred linear mass density of in between 7 and 40 dtex. The fiber material from which the seat cushion body is formed may include more than one type of matrix fiber and/or more than one type of binding fiber.

The seat cushion body 131 may include a plurality of different portions 135-137. The portions are distinguished from each other with regard to a characteristic fiber orientation and/or a density of the seat cushion body 131 and/or the average fiber length. There are no sharp boundaries between the different portions. Rather, the seat cushion body 131 may exhibit gradual transitions in fiber orientation and/or seat cushion body density between the different portions. The seat cushion body 131 may be distinguished from bodies which are formed by fusing pre-formed perpendicular laid fiber sheets inter alia in that it does not include sharp zone boundaries, which enhances durability and comfort.

Such gradual variations in fiber orientation and/or density may be controlled by use of the at least one nozzle 20, 25 and the displacement mechanism configured to effect the relative displacement between the at least one nozzle 20, 25 and the mold 10.

The seat cushion body 131 may have a resilient portion 135. The resilient portion 135 may have a fiber orientation corresponding to the main load direction 132 of the seat cushion body. I.e., the preferential direction of the fibers in the resilient portion corresponds to the main load direction 132 and is perpendicular to at least one major face 133 of the seat cushion body 131. Due to the formation of the fiber matrix, fiber shapes and statistical distributions in fiber orientation, not all fiber fibers will be directed along the main load direction 132 in the resilient portion. The resilient portion 135 may be considered to have a fiber orientation along the main load direction 132 if more than 50% of the fibers are respectively oriented at an angle of less than 45° to the main load direction 132. In other words, in the resilient portion 135, the majority of fibers may be disposed at angle of more than 45° relative to the plane of the major face 133.

The fiber configuration in the resilient portion 135 is schematically indicated at the inset 145. As seen in the inset 145, a majority of the fibers in the resilient portion 135 may be oriented at an angle of less than 45° to the main load direction, and the fiber spacing may be sufficiently large so as to allow the fibers to deflect when a load is directed along the main load direction 132. Cross-linking fibers, which interconnect the fibers which are mainly disposed parallel to the main load direction 132, allow a fiber matrix to be formed in the resilient portion 135.

The seat cushion body 131 may include further portions 136, 137 disposed at the major faces 133 and 134, respectively. The further portions 136 and 137, respectively, may be distinguished from the resilient portion 135 with regard to at least one of fiber orientation or seat cushion body density. In the seat cushion body 131 of FIG. 19, the fibers in the further portions 136 and 137 respectively may have a preferential direction parallel to the plane of the major face at which they are disposed. The density of the seat cushion body at the major faces 133 or 134 may be greater than a density in the resilient portion 135. An average length of the fibers in the further portions 136 and 137 may be different from an average length of the fibers in the resilient portion 135.

Such a preferential fiber orientation at the major faces 133, 134 may be attained by the abutment of fibers along the mold faces 11, 12. Additionally or alternatively, half modes may be displaced towards each other to cause the fibers to be preferentially oriented along the major faces 133, 134 in the further portions 136 and 137.

The fiber configuration in the further portion 136 disposed at the major face 133 is schematically indicated at the inset 146. As seen in the inset 146, a majority of the fibers in the further portion 136 may be oriented at an angle of less than 45° to the plane of the major face 133, and the fibers may have a packing density greater than in the resilient portion 135. The fibers in the further portion 136 may have an average length which is shorted than an average length of the fibers in the resilient portion 135. The further portion 137 disposed on the other major face 134 may have a configuration, with regard to fiber orientation and seat cushion body density, which is similar to the one of the portion 136.

As has been indicated above, the seat cushion body 131 may be formed in a unitary manner by the system 1 and methods according to embodiments. The seat cushion body 131 may be formed such that there are gradual transitions in fiber orientation and density between the resilient portion 135 and the further portions 136 and 137, respectively. The seat cushion body 131 may include a transition portion 138 which is disposed in between the resilient portion 135 and the further portion 136 on the major face 133. In the transition portion 138, the fiber orientation varies gradually from the fiber orientation of the resilient portion 135 to the fiber orientation of the further potion 136 on the major face 133, and the density of the cushion body varies gradually from the density of the resilient portion to the density of the further portion 136 on the major face 133. The fiber configuration in the resilient portion 138 is schematically indicated at the inset 147.

The seat cushion body 131 includes a transition portion 139 which is disposed in between the resilient portion 135 and the further portion 137 on the major face 134. In the transition portion 139, the fiber orientation varies gradually from the fiber orientation of the resilient portion 135 to the fiber orientation of the further potion 137 on the major face 134, and the density of the cushion body varies gradually from the density of the resilient portion 135 to the density of the further portion 137 on the major face 134.

The seat cushion body 131 may be formed in a unitary manner from the fiber material which includes binding and matrix fibers. While the seat cushion body 131 has portions distinguished from each other with regard to fiber orientation and/or seat cushion body density, the seat cushion body 131 is homogeneous in the sense that there are no sharp zone boundaries between portions of different fiber orientation and/or seat cushion body density. The seat cushion body 131 thus formed as a unitary body has a height 142 which may be greater than 4 cm. The resilient portion 135 having a height 141 may be disposed so as to be spaced from both major faces 133 and 134.

Fibers may extend between the different portions of the seat cushion body. For illustration, at least the matrix fibers may have a length of preferably more than 15 mm. For further illustration, at least the matrix fibers may have a length of preferably less than or equal to 35 mm. At least some of the fibers may extend from the resilient portion 135 into the further portion 136 on the major face 133 or into the further portion 137 on the major face 134.

In the seat cushion body 131, the resilient portion 135 having the fiber orientation along the main load direction 132 provides good ventilation and resiliency. With the seat cushion body 131 being formed in a unitary manner from thermally cross-linked fibers, good durability and comfort are attained.

While systems and methods according to embodiments have been described in detail, alterations and modifications may be implemented in further embodiments. For illustration, while systems comprising a filling station for filling fibers into the mold have been described, the system according to embodiments may include different numbers and types of processing stations.

For further illustration, while the gas withdrawn from the mold through the at least one nozzle 20, 25 may be air, e.g. ambient air, in any one of the embodiments described herein, other gases may be used.

For further illustration, while the systems and methods according to embodiments may be used for producing seat cushiony, e.g. cushions for supporting the user's thighs or back, the systems and methods according to embodiments may be used for producing other fiber products. The systems and methods may be used for controlling the fiber orientation and/or density, e.g. to attain controlled variations in fiber orientation and/or density through a fiber product which is formed as a unitary body.

Exemplary seats in which the seat cushion bodies may be used include automobile seats, train seats, aircraft seats, seats for home use and seats for office use. The seat cushion bodies produced by the methods, tools and systems may further be used on various components of the seat. For illustration, a seat cushion body may be used at a seat portion which receives a person's thighs, at a backrest portion supporting a person's back, or at a headrest portion or at another component where cushioning is desired.

The systems and methods according to embodiments may be used for producing a wide variety of three-dimensional products, including seat cushion bodies.

## Claims

1. A system for controlling a fiber orientation and/or a density of fibers in a mold (10), the system (1) comprising:
at least one nozzle (20; 25) configured to define a location at which gas is withdrawn from the mold (10), and
a displacement mechanism (21, 22; 21, 22, 26, 27; 31, 32; 22, 36-38; 31, 32, 38) configured to effect a relative displacement between the at least one nozzle (20; 25) and the mold (10),
wherein the system (1) is configured to supply fibers into the mold (10) along a fiber supply direction,
**characterized in that**
the displacement mechanism (21, 22; 21, 22, 26, 27; 31, 32; 22, 36-38; 31, 32, 38) is configured to effect a relative translatory displacement between the at least one nozzle (20; 25) and the mold (10) which is directed parallel to the fiber supply direction.

2. The system of claim 1,
wherein the displacement mechanism (22, 36-38; 31, 32, 38) is further configured to effect a relative translatory displacement between the at least one nozzle (20; 25) and the mold (10) which is directed transverse to the fiber supply direction.

3. The system of any one of the preceding claims, further comprising
a flow guide configured to guide gas from the at least one nozzle (20; 25) to a suction channel (70), the flow guide comprising a plurality of channels (50).

4. The system of claim 3,
the at least one nozzle (20; 25) being in fluid communication
with a first set of channels of the plurality of channels (50) when the at least one nozzle (20; 25) is in a first position relative to the mold (10) and
with a second set of channels of the plurality of channels (50) when the at least one nozzle (20; 25) is in a second position relative to the mold (10) which is different from the first position, the second set of channels being disjoint from the first set of channels.

5. The system of claim 3 or claim 4, further comprising
a closure mechanism (46, 47) configured to increase a flow resistance of a fraction of the plurality of channels (50).

6. The system of claim 5,
wherein the at least one nozzle (20; 25) is configured to actuate the closure mechanism (46, 47).

7. The system of any one of the preceding claims,
wherein a plurality of ventilators (81-86) is arranged on the at least one nozzle (20; 25).

8. The system of any one of the preceding claims, further comprising
a control device (9) configured to control the relative displacement between the at least one nozzle (20; 25) and the mold (10) as a function of a filling level of the mold (10).

9. The system of claim 8, further comprising
a suction device (71; 80) in fluid communication with the at least one nozzle (20; 25),
the control device (9) being configured to control the relative displacement and/or the suction device (71; 80) to adjust the fiber orientation and/or the density of fibers in a spatially varying manner.

10. The system of claim 8 or claim 9,
wherein the control device (9) is configured to control the relative displacement as in dependence on a rate at which the fibers are supplied to the mold (10) as a function time.

11. The system of any one of the preceding claims,
wherein the at least one nozzle (20; 25) comprises a nozzle (20) and a further nozzle (25) arranged to receive the mold (10) therebetween.

12. The system of any one of the preceding claims,
wherein the system (1) is configured to produce a fiber cushion body by thermal activation of at least a fraction of the fibers inserted into the mold (10).

13. A method of controlling a fiber orientation and/or a density of fibers in a mold (10), the method comprising:
supplying fibers into the mold (10) along a fiber supply direction,
withdrawing a gas from the mold (10) through at least one nozzle (20; 25), and
effecting a relative translatory displacement between the at least one nozzle (20; 25) and the mold (10),
**characterized in that**
effecting the relative translatory displacement comprises effecting the relative translatory displacement between the at least one nozzle (20; 25) and the mold (10) in a direction parallel to the fiber supply direction.

14. The method of claim 13,
which is performed by the system (1) of any one of claims 1 to 12.

15. A method of producing a fiber cushion body, comprising
controlling the fiber orientation and/or density of the fibers in the mold (10) using the method of claim 13 or claim 14, and
thermally activating at least a fraction of the fibers to form a fiber cushion body.

## Patentansprüche

1. Ein System zum Steuern einer Faserorientierung und/oder einer Dichte von Fasern in einem Formwerkzeug (10), wobei das System (1) umfasst:
zumindest eine Düse (20; 25), welche dazu eingerichtet ist, eine Position zu definieren, an welcher dem Formwerkzeug (10) Gas entzogen wird, und
einen Verlagerungsmechanismus (21, 22; 21, 22, 26, 27; 31, 32; 22, 36-38; 31, 32, 38), welche dazu eingerichtet ist, eine relative Verlagerung zwischen der zumindest einen Düse (20; 25) und dem Formwerkzeug (10) zu bewirken,
wobei das System (1) dazu eingerichtet ist, dem Formwerkzeug (10) entlang einer Faserzufuhrrichtung Fasern zuzuführen;
**dadurch gekennzeichnet, dass**
der Verlagerungsmechanismus (21, 22; 21, 22, 26, 27; 31, 32; 22, 36-38; 31, 32, 38) dazu eingerichtet ist, eine relative translatorische Verlagerung zwischen der zumindest einen Düse (20; 25) und dem Formwerkzeug (10) in eine zu der Faserzufuhrrichtung parallele Richtung zu bewirken.

2. Das System gemäß Anspruch 1,
wobei der Verlagerungsmechanismus (22, 36-38; 31, 32, 38) ferner dazu eingerichtet ist, eine relative translatorische Verlagerung zwischen der zumindest einen Düse (20; 25) und dem Formwerkzeug (10) zu bewirken, welche transversal zu der Faserzufuhrrichtung gerichtet ist.

3. Das System gemäß einem jeden der vorhergehenden Ansprüche, ferner umfassend
ein Flussleitelement, welches dazu eingerichtet ist, einem Ansaugkanal (70) ein Gas von der zumindest einen Düse (20; 25) zuzuführen, wobei das Flussleitelement eine Vielzahl von Kanälen (50) umfasst.

4. Das System gemäß Anspruch 3,
wobei die zumindest eine Düse (20; 25) in Fluidkommunikation mit einer ersten Menge von Kanälen der Vielzahl von Kanälen (50) steht, wenn sich die zumindest eine Düse (20; 25) relativ zu dem Formwerkzeug (10) in einer ersten Position befindet, und mit einer zweiten Menge von Kanälen der Vielzahl von Kanälen (50) steht, wenn sich die zumindest eine Düse (20; 25) relativ zu dem Formwerkzeug (10) in einer zweiten Position befindet, welche von der ersten Position verschieden ist, wobei die zweite Menge von Kanälen von den ersten Menge von Kanälen verschieden ist.

5. Das System gemäß Anspruch 3 oder Anspruch 4, ferner umfassend
einen Verschlussmechanismus (46, 47), welcher dazu eingerichtet ist, einen Flusswiderstand eines Teils der Vielzahl von Kanälen (50) zu erhöhen.

6. Das System gemäß Anspruch 5,
wobei die zumindest eine Düse (20; 25) dazu eingerichtet ist, den Verschlussmechanismus (46, 47) betätigen.

7. Das System gemäß einem jeden der vorhergehenden Ansprüche,
wobei eine Vielzahl von Ventilatoren (81-80) auf der zumindest einen Düse (20; 25) angeordnet ist.

8. Das System gemäß einem jeden der vorhergehenden Ansprüche, ferner umfassend
eine Steuervorrichtung (9), welche dazu eingerichtet ist, die relative Verlagerung zwischen der zumindest einen Düse (20; 25) und dem Formwerkzeug (10) als eine Funktion eines Füllstandes des Formwerkzeugs (10) zu steuern.

9. Das System gemäß Anspruch 8, ferner umfassend
eine Ansaugvorrichtung (71; 80) in Fluidkommunikation mit der zumindest einen Düse (20; 25),
wobei die Steuervorrichtung (9) dazu eingerichtet ist, die relative Verlagerung und/oder die Ansaugvorrichtung (71; 80) so zu steuern, um die Faserorientierung und/oder die Dichte der Fasern in einer sich räumlich variierenden Weise einzustellen.

10. Das System gemäß Anspruch 8 oder Anspruch 9,
wobei die Steuervorrichtung (9) dazu eingerichtet ist, die relative Verlagerung in Abhängigkeit einer Rate, mit welcher die Fasern dem Formwerkzeug (10) zugeführt werden, als eine Funktion der Zeit zu steuern.

11. Das System gemäß einem jeden der vorhergehenden Ansprüche,
wobei die zumindest eine Düse (20; 25) eine Düse (20) und eine weitere Düse (25) umfasst, welche so angeordnet sind, dass sie das Formwerkzeug (10) dazwischen empfangen.

12. Das System gemäß einem jeden der vorhergehenden Ansprüche,
wobei das System (1) dazu eingerichtet ist, einen Faserkissenkörper durch ein thermisches Aktivieren zumindest eines Teils der in das Formwerkzeug (10) eingeführten Fasern zu erzeugen.

13. Ein Verfahren zum Steuern einer Faserorientierung und/oder einer Dichte von Fasern in einem Formwerkzeug (10), wobei das Verfahren umfasst:
Zuführen von Fasern in ein Formwerkzeug (10) entlang einer Faserzufuhrrichtung;
Entziehen eines Gases aus dem Formwerkzeug (10) durch zumindest eine Düse (20; 25), und
Bewirken einer relativen translatorischen Verlagerung zwischen der zumindest einen Düse (20; 25) und dem Formwerkzeug (10),
**dadurch gekennzeichnet, dass**
das Bewirken der relativen translatorischen Verlagerung ein Bewirken der relativen translatorischen Verlagerung zwischen der zumindest einen Düse (20; 25) und dem Formwerkzeug (10) in eine zu der Faserzufuhrrichtung parallele Richtung umfasst.

14. Das Verfahren gemäß Anspruch 13,
welches durch das System (1) gemäß einem jeden der Ansprüche 1 bis 12 ausgeführt wird.

15. Ein Verfahren zum Erzeugen eines Faserkissenkörpers, umfassend
Steuern der Faserorientierung und/oder Dichte der Fasern in dem Formwerkzeug (10) mit dem Verfahren gemäß Anspruch 13 oder Anspruch 14, und
thermisches Aktivieren zumindest eines Teils der Fasern zum Ausbilden eines Faserkissenkörpers.

## Revendications

1. Système pour commander une orientation de fibres et/ou une densité de fibres dans un moule (10), le système (1) comprenant :
au moins une buse (20 ; 25) configurée pour définir un emplacement au niveau duquel du gaz est retiré du moule (10), et
un mécanisme de déplacement (21, 22 ; 21, 22, 26, 27 ; 31, 32 ; 22, 36-38 ; 31, 32, 38) configuré pour effectuer un déplacement relatif entre la au moins une buse (20 ; 25) et le moule (10),
dans lequel le système (1) est configuré pour alimenter des fibres dans le moule (10) le long d'une direction d'alimentation en fibres,
**caractérisé en ce que**
le mécanisme de déplacement (21, 22 ; 21, 22, 26, 27 ; 31, 32 ; 22, 36-38 ; 31, 32, 38) est configuré pour effectuer un déplacement translatoire relatif entre la au moins une buse (20 ; 25) et le moule (10) qui est dirigé parallèlement à la direction d'alimentation en fibres.

2. Système selon la revendication 1,
dans lequel le mécanisme de déplacement (22, 36-38 ; 31, 31, 38) est en outre configuré pour effectuer un déplacement translatoire relatif entre la au moins une buse (20 ; 25) et le moule (10) qui est dirigé transversalement à la direction d'alimentation en fibres.

3. Système selon l'une quelconque des revendications précédentes, comprenant en outre
un guide d'écoulement configuré pour guider du gaz de la au moins une buse (20 ; 25) jusqu'à un canal d'aspiration (70), le guide d'écoulement comprenant une pluralité de canaux (50).

4. Système selon la revendication 3,
La au moins une buse (20 ; 25) étant en communication fluidique
avec un premier ensemble de canaux de la pluralité de canaux (50) quand la au moins une buse (20 ; 25) est dans une première position par rapport au moule (10) et
avec un second ensemble de canaux de la pluralité de canaux (50) quand la au moins une buse (20 ; 25) est dans une seconde position par rapport au moule (10) qui est différente de la première position, le second ensemble de canaux étant disjoint du premier ensemble de canaux.

5. Système selon la revendication 3 ou la revendication 4, comprenant en outre
un mécanisme de fermeture (46, 47) configuré pour augmenter une résistance à l'écoulement d'une fraction de la pluralité de canaux (50).

6. Système selon la revendication 5,
dans lequel la au moins une buse (20 ; 25) est configurée pour actionner le mécanisme de fermeture (46, 47).

7. Système selon l'une quelconque des revendications précédentes,
dans lequel une pluralité de ventilateurs (81-86) sont agencés sur la au moins une buse (20 ; 25).

8. Système selon l'une quelconque des revendications précédentes, comprenant en outre
un dispositif de commande (9) configuré pour commander le déplacement relatif entre la au moins une buse (20 ; 25) et le moule (10) en fonction d'un niveau de remplissage du moule (10)

9. Système selon la revendication 8, comprenant en outre
un dispositif d'aspiration (71 ; 80) en communication fluidique avec la au moins une buse (20 ; 25),
le dispositif de commande (9) étant configuré pour commander le déplacement relatif et/ou le dispositif d'aspiration (71 ; 80) pour ajuster l'orientation de fibres et/ou la densité de fibres d'une manière spatialement variable.

10. Système selon la revendication 8 ou la revendication 9,
dans lequel le dispositif de commande (9) est configuré pour commander le déplacement relatif autant en fonction d'un rythme auquel les fibres sont alimentées au moule (10) qu'en fonction du temps.

11. Système selon l'une quelconque des revendications précédentes,
dans lequel la au moins une buse (20 ; 25) comprend une buse (20) et une buse supplémentaire (25) agencées pour recevoir le moule (10) entre elles.

12. Système selon l'une quelconque des revendications précédentes,
dans lequel le système (1) est configuré pour produire un corps de coussin de fibres par l'activation thermique d'au moins une fraction des fibres insérées dans le moule (10).

13. Procédé de commande d'une orientation de fibres et/ou d'une densité de fibres dans un moule (10), le procédé comprenant :
l'alimentation de fibres jusque dans le moule (10) le long d'une direction d'alimentation en fibres,
le retrait d'un gaz à partir du moule (10) par l'intermédiaire d'au moins une buse (20 ; 25), et
la réalisation d'un déplacement translatoire relatif entre la au moins une buse (20 ; 25) et le moule (10),
**caractérisé en ce que**
la réalisation du déplacement translatoire relatif comprend la réalisation du déplacement translatoire relatif entre la au moins une buse (20 ; 25) et le moule (10) dans une direction parallèle à la direction d'alimentation en fibres.

14. Procédé selon la revendication 13,
qui est effectué par le système (1) selon l'une quelconque des revendications 1 à 12.

15. Procédé de production d'un corps de coussin de fibres, comprenant
la commande de l'orientation de fibres et/ou de la densité des fibres dans le moule (10) en utilisant le procédé selon la revendication 13 ou la revendication 14, et
l'activation thermique d'au moins une fraction des fibres pour former un corps de coussin de fibres.
